# EUROPEAN PATENT SPECIFICATION

(11) **EP 0 658 277 B1**
(45) Date of publication and mention of the grant of the patent: **26.11.2003**
(21) Application number: 93918802.5
(22) Date of filing: 06.09.1993
(51) Int. Cl.: H01M 4/88, H01M 4/96, H01M 8/20, H01M 8/18, B29C 35/02, C25B 11/04, H01B 1/22, H01B 1/24, C25B 11/12, C25C 7/02

(54) **FLEXIBLE, CONDUCTING PLASTIC ELECTRODE AND PROCESS FOR ITS PREPARATION**
FLEXIBLE, LEITENDE PLASTIKELEKTRODE UND VERFAHREN ZU DEREN HERSTELLUNG
ELECTRODE PLASTIQUE FLEXIBLE ET CONDUCTRICE ET SON PROCEDE

(30) Priority: 04.09.1992 AU PL450492
(43) Date of publication of application: 21.06.1995
(73) Proprietor: Pinnacle VRB Limited, Melbourne, Victoria 3000 (AU)
(72) Inventor: ZHONG, Shihuang, Kensington, NSW 2033 (AU); KAZACOS, Michael, Sylvania Heights, NSW 2224 (AU); SKYLLAS KAZACOS, Maria, Sylvania, NSW 2224 (AU); HADDADI-ASL, Vahid, Hillsdale, NSW 2036 (AU)
(74) Representative: Raynor, John
(86) International application number: AU9300456
(87) International publication number: WO94006164

(56) References cited:
- EP-A- 0 181 587
- EP-A- 0 268 397
- WO-A-89/05528
- WO-A-90/12842
- DE-A- 2 249 973
- FR-A- 2 286 169
- US-A- 4 164 068
- US-A- 4 379 814
- PATENT ABSTRACTS OF JAPAN vol. 14, no. 102 (E-0894) 23 February 1990 & JP-A-01 304 684 (MATSUSHITA)

## Description

The present invention is directed to a flexible, conducting plastic electrode and a process for the preparation of the same. The electrodes have application in redox flow batteries, particularly vanadium redox flow batteries, as well as in other electrochemical applications such as electrodepositing and electrowinning.

The desired characteristics for electrode materials which are to be used in redox cells and other electrolytic processes include: low electrical resistivity, good mechanical properties and chemical stability and optionally low weight and low volume. The electrode material should not be attacked by reactants or products during cell operation. Thus there is a need for an electrode material which has good mechanical properties to withstand the hydraulic pressure and cell assembling operation without cracking and which is solution impermeable so that penetration and attack of the metal current collector (in end-electrodes) and loss in current efficiency (due to electrolytes crossing the bipolar electrodes) is low.

Objects of the present invention are to provide a flexible, conducting plastic electrode and a process for the preparation of the same.

The present inventors have surprisingly found that by combining a thermo-plastic polymer, an elastomeric polymer and a conductive filler material, a superior flexible, conducting plastic electrode is produced which has good physical strength, chemical stability and electrical conductivity. In particular, the inventors have found that by combining, for example, high density polyethylene (HDPE) resin, an elastomeric polymer such as, for example, styrene-ethene/butene-styrene (SEBS) block copolymer and conductive filler material such as carbon black particles or a mixture of carbon black particles and graphite fibres, a commercially useable plastic electrode is produced.

According to a first embodiment of this invention there is provided a conducting electrode comprising a flexible conducting plastic material and a further electrode component which is a metal mesh, a metal sheet, a metal foil, or a graphite felt; wherein the plastic material comprises:
a. a conductive filler material;
b. a thermoplastic polymer which has moderate to high crystallinity or a glass temperature (Tg) above the operating conditions of the electrode; and
c. an elastomeric polymer;
wherein the amount of a. is such that the plastic material has a resistivity of no more than 3.991 ohm.cm and the degree of crosslinking of b. with c. is such that the electrode is flexible and has high tensile strength, and wherein the said further electrode component is pressure and heat welded in a configuration which is
(i) onto at least one surface of the flexible conducting plastic material,
(ii) a metal foil between two layers of the said conducting plastic material, or
(iii) a metal mesh between two layers of the conducting plastic material.

According to another embodiment of this invention there is provided a conducting electrode comprising flexible conducting plastic material and a further electrode component which is a metal mesh, a metal sheet, a metal foil, or a graphite felt; wherein the plastic material comprises:
a. a conductive filler material;
b. a thermoplastic polymer which has moderate to high crystallinity or a glass temperature (Tg) above the operating conditions of the electrode; and
c. an elastomeric polymer;
wherein the amount of a, is such that the plastic material has a resistivity of no more than 3.991 ohm.cm and the relative amounts of a., b. and c. are such that the conducting plastic material is flexible and has a high tensile strength, and wherein said further electrode component is pressure and heat welded in a configuration which is
(i) onto at least one surface of the flexible conducting plastic material,
(ii) a metal foil between two layers of the conducting plastic material, or
(iii) a metal mesh between two layers of the conducting plastic material.

The conducting plastic electrode of the first embodiment may be pressure and heat welded onto at least one metal mesh, a metal mesh and graphite felt or at least one graphite felt. Hence, in the case when the electrode is in the form of a sheet the following configurations may be employed, for example:
(1) a metal mesh may be pressure and heat welded onto at least one side of the sheet;
(2) a metal mesh may be pressure and heat welded onto one side of the sheet and a graphite felt pressure and heat welded onto the other side of the sheet;
(3) a graphite felt may be pressure and heat welded onto at least one side of the sheet; and
(4) a metal mesh sheet or foil may be pressure and heat welded between two of the flexible, conducting plastic electrodes.

Carbon and graphite felts are generally woven from yams which are bundles of individual carbon monofilaments generally having a diameter in the range from about 1 to 50 µm, usually in the range from about 5 to 10 µm. The yams will typically include from about 100 to 20,000 monofilaments, usually having from about 3,000 to 6,000 filaments. The denier of the yams used as in fabricating the carbon felts will typically be in the range from about 500 to 5,000 mg/m, usually being in the range from about 1,000 to 2,000 mg/m. Denier is equal to the number of grams which yield 9,000 meters of the yarn or filament. The yarns are woven by conventional weaving machines yielding large fabrics which may be cut into the desired dimensions for the electrode. Each electrode may employ a plurality of layers of the fabric, so that the final dimensions of the electrode may vary widely.

According to a second embodiment of this invention there is provided a process for making a flexible, conducting plastic electrode, the process comprising:
(a) mixing a thermo-plastic polymer, an elastomeric polymer and conductive filler material, the mixing being at a temperature(s) above the melting point temperatures of the thermo-plastic polymer and the elastomeric polymer,
(b) pressure moulding (or extrusion moulding or injection moulding or calendering or veneering) the mixture of (a) at a temperature(s) above the melting temperatures of the thermo-plastic polymer and the elastomeric polymer until the polymers are at least partially cross-linked wherein the degree of cross-linking of the thermo-plastic polymer with the elastomeric polymer is such that the electrode is flexible and has high tensile strength, and
(c) cooling the cross-linked polymerized mixture of (b) to form the electrode;
   wherein the amount of the conductive filler material is such that the electrode has a resistivity of no more than 3.991 ohm.cm., and
(d) pressure and heat welding at least one electrode material which is a metal mesh, metal sheet, a metal foil or a graphite felt onto at least one surface of the flexible, conducting plastic electrode.

According to a further embodiment of this invention there is provided a process for making a flexible, conducting plastic electrode, the process comprising:
(a) mixing a thermo-plastic polymer, an elastomeric polymer and conductive filler material, the mixing being at a temperature(s) above the melting point temperatures of the thermo-plastic polymer and the elastomeric polymer,
(b) pressure moulding (or extrusion moulding or injection moulding or calendering or veneering) the mixture of (a) at a temperature(s) above the melting temperatures of the thermo-plastic polymer and the elastomeric polymer until the mixture results in an electrode which is flexible and has high tensile strength, and
(c) cooling the cross-linked polymerized mixture of (b) to form the electrode;
wherein the amount of the conductive filler material is such that the electrode is electrically conducting.

Generally, during the pressure moulding (or other moulding) the pressure forces the mixture to fill the mould cavity.

Typically in step (c) the polymerized mixture of (b) is cooled rapidly, for example, typically 1-10°C per minute, more typically 2 to 5°C per minute.

The process may also include:
(b)(i) adding a polymerization initiator to the mixture of (a) to at least partially cross-link the thermo-plastic polymer with elastomeric polymer.

The process may also include:
(d) adding a plastics additive(s) to the mixture of (a).

Also included within the scope of this invention is a conducting plastic electrode when prepared by the method of the second embodiment.

Generally during the pressure moulding the pressure forces the mixture to fill the mould cavity.

Generally, the moulding pressure-during elevated pressure step (c) is from 2 - 2500 Kg/cm², more typically 2 - 500 Kg/cm² and even more typically, 2 - 300 Kg/cm². Generally, the temperature in step (b) is in the range 100 - 750°C, typically 170 - 350°C, and more typically 150 - 260°C. Generally, the pressure and elevated temperatures are simultaneously applied for at least 15 to 30 minutes, more generally 25 minutes to 60 minutes and up to 6 hours or more. Alternatively, a 10 to 30 minute preheat (typically 20 minutes at 100 - 750°C, more typically 120 - 400°C followed by a compression which is gradually increased up to 30 - 70 tons, more typically 40 - 50 tons where it is held typically for 15 - 60 minutes, more typically 30 minutes at a temperature at the above conditions. The mould is then cooled down to room temperature over 1.5 - 4 hours, typically over 2 hours. To prepare an end-electrode, a metal mesh (such as copper) or alternative as listed elsewhere in this specification is placed in the bottom of the mould. The carbon-plastic sheet is placed on top and the mould preheated up to 100 - 750°C, more typically 120 - 400°C. The temperature is maintained for 15 - 60 minutes, more typically 30 minutes, before applying gradually increased pressure up to 30 - 70 tons, more typically 40 - 50 tons where it is held typically for 15 - 90 minutes, more typically 60 minutes. While keeping the hot carbon-plastic sheet with the metal mesh backing in mould, a window of desired area e.g. 300 x 500 mm² is placed on the top of the hot sheet and a graphite felt is placed in the window. A pressure of 1 - 6 tons, typically 2 tons, is then applied to the mould with the window, and this is maintained for 20 - 90 minutes, typically 30 minutes. The mould is then cooled down to room temperature to obtain the carbon-plastic and graphite felt composite end-electrode.

The conductive filler material has high conductivity and is present in sufficient amounts to allow for interparticle contact between the filler species so that the electrode is electrically conducting. The filler material may comprise one or more of the following materials: carbon black, graphite, metal powder, metallized glass fibres, polypyrrole powder, pitch-derived carbon fibres, graphite fibres, polyacrylonitrile-derived carbon fibres and polyacrylonitrile-derived graphite fibres. Typically, the filler material is comprised of carbon black by itself or a mixture of carbon black and graphite fibres (in a range of 5-70 wt % of the total composition. The ratio of carbon black to graphite fibres is typically in a range of 5:95 to 99:1 wt% more typically in a range of 30:70 to 70:30 wt% and even more typically 95:5 wt%. Generally, at least two different types of carbon black are used, for example fine carbon black powder (2 - 35nm) and coarse carbon black powder (35nm - 10,000nm) in a ratio of fine carbon:coarse carbon of from 1:99 to 99:1. In particular, a weight ratio of total carbon content to polymer of 2:3 in the electrode of the invention has good electrical conductivity while maintaining excellent physical strength and flexibility.

In the electrode, the thermo-plastic is the basic polymer which maintains the plastic properties of the composite and is generally 10-80 wt% more typically 20-70 wt% of the electrode. If the weight fraction of the thermo-plastic is too low there will be a resultant unacceptable loss of the plastic properties of the electrode. If the weight fraction of the thermo-plastic is too high there will be a resultant unacceptable decrease in electrical conductivity of the electrode.

Examples of thermo-plastic polymers include, by way of illustration only, endcapped polyacetals. such as poly(oxymethylene) or polyformaldehyde, poly(trichloroacetaldehyde), poly(n-valeraldehyde), poly(acetaldehyde), poly(propionaldehyde), and the like; acrylic polymers, such as polyacrylamide, poly(acrylic acid), poly(methacrylic acid), poly(ethyl acrylate), poly(methyl methacrylate), and the like; fluoro-carbon polymers, such as poly(tetrafluoroethylene), perfluorinated ethylene-propylene copolymers, ethylene-tetrafluoroethylene copolymers, poly(chlorotrifluoroethylene), ethylene-chlorotrifluoroethylene copolymers, poly(vinylidene fluoride), poly(vinyl fluoride), and the like; polyamides, such as poly(6-aminocaproic acid) or poly (e-capro-lactam), poly(hexamethylene adipamide), poly(hexamethylene sebacamide), poly(11-aminoundecanoic acid), and the like; polyaramides, such as poly(imino-1,3-phenyleneiminoisophthaloyl) or poly(m-phenylene isophthalamide). and the like: parylenes, such as poly-p-xylylene, poly(chloro-p-xylylene), and the like; polyaryl ethers, such as poly(oxy-2,6-dimethyl-1,4-phenylene) or poly(p-phenylene oxide), and the like: polyaryl sulfones, such as poly(oxy-1.4-phenylenesulfonyl-1,4-phenylene-oxy-1,4-phenylene-isopropylidene-1,4-phenylene), poly(sulfonyl-1,4-phenyl-eneoxy-1,4-phenylenesulfonyl-4,4'-biphenylene), and the like; polycarbonates, such as poly(bisphenol A) or poly(carbonyldioxy-1,4-phenyleneisopropylidene-1,4-phenylene), and the like; polyesters, such as poly(ethylene terephthalate), poly(tetramethylene terephthalate), poly(cyclohexylene-1,4-dimethylene terephthalate) or poly(oxymethylene-1,4-cyclohexylenemethyleneoxyterephthaloyl), and the like; polyaryl sulfides, such as poly(p-phenylene sulfide) or poly(thio-1,4-phenylene), and the like; polyimides, such as poly(pyromellitimido-1,4-phenylene), and the like; C2 - C12 polyolefins, such as polyethylene, polypropylene, poly(1-butene), poly(2-butene), poly(1-pentene), poly(2-pentene), poly(3-methyl-1-pentene), poly(4-methyl-1-pentene), 1,2-poly-1,3-butadiene, 1,4-poly-1,3-butadiene, polyisoprene, polychloroprene, polyacrylonitrile, poly(vinyl acetate), poly(vinylidene chloride), polystyrene, and the like; copolymers of the foregoing, such as acrylonitrile-butadiene-styrene (ABS) copolymers, and the like. The molecular weight of the thermoplastic polymer is typically in the range 25,000 to 500,000, more typically 30,000 to 300,000. Further examples of thermoplastic polymers may be found in "Polymer Handbook", editors J. Brandrup and E.H. Immergut, 3rd edition, John Wiley & Sons, New York, 1989, "Encyclopedia of Chemical Technology", Kirk-Othmer, 3rd Edition, John Wiley & Sons, New York, "Compounding Materials for the Polymer Industries", "Handbook of Thermoset Plastics", S. H. Goodman, Noyes Publications, Park Ridge, New Jersey 1986, J. S. Dick, Noyes Publications, Park Ridge, New Jersey 1987, and "Handbook of Plastics Materials and Technology", editor Irvin I. Rubin, John Wiley & Sons, New York, 1990, the contents of which are incorporated herein by cross reference.

A thermo-plastic is used herein to mean a thermo-plastic polymer which has moderate to high crystallinity or a glass temperature (T_{g}) above the operating conditions of the electrode. The T_{g} is the temperature below which the polymer exhibits glasslike behaviour. One or more of the following are typical thermo-plastics which may be used in the electrode: low density polyethylene, high density polyethylene, polypropylene, polybutylene or polystyrene. In particular, high density polyethylene, is a suitable thermoplastic for use in the electrode of the invention.

According to a further embodiment of this invention there is provided an all-vanadium redox battery having a positive compartment containing a catholyte in electrical contact with a positive electrode, the catholyte comprising an electrolyte containing tetravalent vanadium ions or pentavalent vanadium ions, a negative compartment containing an anolyte in electrical contact with a negative electrode, the anolyte comprising an electrolyte containing tetravalent vanadium ions, trivalent vanadium ions or divalent vanadium ions, and an ionic conducting separator disposed between the positive and negative compartments and in contact with the catholyte and anolyte to provide ionic communication therebetween and wherein the catholyte includes a salt of the formula VO(X)_{y} where y is 2 and X is selected from F, Br or Cl or y is 1 and X is selected from SO₄ or O, V₂O₅, V₂O₃, V₂O₄, VO, VSO₄, VOSO₄, V₂(SO₄)₃, (VO₂)₂SO₄, and NH₄VO₃, and the concentration of the salt is 0.1M to 8.0M, more particularly 0.1M to 5.0M, and wherein at least one of the positive and negative electrodes is a conducting plastic electrode of the first embodiment or a conducting plastic electrode when prepared by the process of the second or third embodiments.

The electrochemical reactions of the redox cell can be conducted in any electrochemical cell which has an anode compartment and a cathode compartment through which the appropriate fluids can be transported. A particular redox cell in which the permeation selective membranes may be used to advantage is an all-vanadium battery described in United States Patent No. 4,786,567, the contents of which are incorporated herein by cross reference.

Although the design of the electrode and cathode compartments of the redox cell are not critical to the practice of this invention, certain embodiments are preferred. For example, a parallel plate electrochemical cell in which anode and cathode compartments alternate in order to increase voltage and decrease current is a preferred embodiment. Generally, the electrodes will have a height in the range from about 1 cm to 100 cm, a width in the range from about 0. 1 cm to 900 cm, more typically from about 5 cm to 300 cm, and a thickness in the range from about 0.02 cm to 3.0 cm, more typically 0.02 cm to 1.0 cm. The particular dimensions chosen will depend primarily on the capacity of the electrochemical cell.

The elastomeric polymer is the critical component for improving the flexibility of the composite under high pigment loading conditions (i.e. higher than 40wt% loading with conducting filler). Examples of naturally occurring and synthetic elatomeric polymers are given in "Elastomers and Rubber Compounding Materials" Studies in Polymer Science I, I, Franta (editor), Elsevier, New York 1989, "Compounding Materials for the Polymer Industries", J. S. Dick, Noyes Publications, Park Ridge, New Jersey 1987, "Handbook of Elastomers", A. K. Bhowmick and H. L. Stephens (editors), Marcel Dekker. Inc.. New York 1988 (see Chapter 9, in particular), and "Natural Rubber Science and Technology", A. D. Roberts (editor), Oxford University Press, 1988, the contents of all of which are incorporated herein by cross-reference. Particularly useful elastomeric polymers are thermoplastic styrene block copolymers such as diblock ("SB"), triblock ("SBS" or "SIS"), saturated triblock ("SEBS"), radial trichain, radial tetrachain, and radial multichain polymers or any combination thereof. For example, the styrenic block copolymers employed may be a combination of one or more of styrene-isoprene-styrene, styrene-butadiene-styrene, or styrene-(ethylene-butylene)-styrene. Typically, styrene-butadiene-styrene ("SBS") or styrene-(ethylene-butylene)-styrene ("SEBS") or a mixture thereof (e.g. in the ratio in the range 1:10 to 10:1 w/w) is used.

In an embodiment of the invention the elastomeric polymer concentration, for example SB, SBS, SIS or SEBS block copolymer concentration or SBR, NR, XNBR, SBR-NR, PTPR, SBR latex, NR latex, EPR, n-butyl rubber, BMX4², santoprene, silicone rubber, IR, PP, PIP, PP, PU rubber, CSM, CR, BR, HSN, ACM, polybutadiene rubbers, IIR, polyisoprene rubbers. MFQ, PPVQ, butadiene-isoprene rubbers, CM, BIIR, CIIR, NIR, butadiene-piperylene rubbers, EPM, MVQ, AFMU, AU, EU, acrylonitrile-butadiene rubbers, XNBR latex, SBR-NR latex, PTPR latex, carboxylated SBR, carboxylated NR, carboxylated SBR-NR, FKM, CFM, ANM, CO, carboxylated PTPR, ECO, T, natural rubbers, NBR/PVC, MQ, butadiene-propylene rubbers, MPQ, EPDM+EPM, EVA rubber, NBR or EPDM, is 0.1-50wt% of the total electrode composition. The molecular weight of the elastomeric polymer is typically in the range 25,000 to 500,000, more typically 30,000 to 300,000. A higher proportion of styrenic block copolymer will give the electrode a rubber appearance. A lower proportion does not significantly improve the flexibility of the composite. A concentration in the range of 10-30wt%, more particularly in the range of 15-25wt% and even more particularly about 20wt% of styrene-butadiene-styrene or is typically used.

A cross linking agent may be used to cross-link the thermoplastic polymer with the elastomeric polymer. The cross linking agent is generally chosen depending on the nature of the thermoplastic polymer and the elastomeric polymer. Examples include vinylidene chloride, vinyl acetate, styrene, acrylamide, 1,3 butadiene, methacrylic acid, vinyl chloride, acrylonitrile, 2-hydroxyethyl methacrylate, methyl methacrylate, may be chosen depending on the polyelectrolyte and ion exchange resin. Other examples of possible monomers for use as cross linking agents include: esters of acrylic and methacrylic acid such as methyl, ethyl, propyl, isobutyl, isopropyl, butyl, tert-butyl, sec-butyl, ethylhexyl, amyl, hexyl, octyl, decyl, dodecyl, cyclohexyl, isobornyl, benzyl, phenyl, alkylphenyl, ethoxymethyl, ethoxyethyl, ethoxypropyl, propoxymethyl, propoxyethyl, propoxypropyl, ethoxyphenyl, ethoxybenzyl, ethoxycyclohexyl, hydroxyethyl, hydroxypropyl, ethylene, propylene, isobutylene, diisobutylene, styrene, ethylvinylbenzene, vinylbenzylchloride, vinyltoluene, vinyl chloride, vinyl acetate, vinylidene chloride, dicyclopentadiene, acrylonitrile, methacrylonitrile, acrylamide, methacrylamide, diacetone acrylamide, neutral or half-acid half-esters or free diacids of the unsaturated dicarboxylic acids including itaconic, citraconic, aconitic, fumaric, and maleic acids, substituted acrylamides, such as N-monoalkyl, N,N-dialkyl and N-dialkylaminoalkylacrylamides or methacrylamides where the alkyl groups may have from one to eighteen carbon atoms, such as methyl, ethyl, isopropyl, butyl, hexyl, cyclohexyl, octyl, dodecyl, hexadecyl and octadecyl aminoalkyl esters of acrylic or methacrylic acid, such as b-dimethylaminoethyl, b-diethylaminoethyl or 6-dimethylaminohexyl acrylates and methacrylates, alkylthioethyl methacrylates and acrylates such as ethylthioethyl methacrylate. functional monomers such as vinylbenzene, sulfonic acid, vinyl esters, including vinyl acetate, vinyl propionate, vinyl butyrate, vinyl laurate, vinyl ketones including vinyl methyl ketone, vinyl ethyl ketone, vinyl isopropyl ketone, vinyl n-butyl ketone, vinyl -hexyl ketone, vinyl octyl ketone, methyl isopropenyl ketone, vinyl aldehydes including acrolein, methacrolein, crotonaldehyde, vinyl ethers including vinyl methyl ether, vinyl ethyl ether, vinyl propyl ether, vinyl isobutyl ether, vinylidene compounds including vinylidene chloride, vinylidene bromide, or vinylidene bromochloride, vinylpyndines, such as 2-vinylpyridine, 4-vinylpyridine, 2-methyl-5-vinylpyridine. Examples of polyethylenically unsaturated monomers include: divinylbenzene, divinylpyridine, divinylnaphthalenes, diallylphthalate, ethylene glycol diacrylate, ethylene glycol dimethacrylate, trimethylolpropanetrimethacrylate, divinylsulfone, polyvinyl or polyallyl ethers of glycol, of glycerol, of pentaerythritol, of diallyl malonate, diallyl oxalate, diallyl adipate, diallyl sebacate, divinyl sebacate, diallyl tartrate, diallyl silicate, triallyl tricarballylate, diethyleneglycol, of monothio-derivatives of glycols, and of resorcinol divinylketone, divinylsulfide, allyl acrylate, diallyl maleate, diallyl fumarate, diallyl succinate, diallyl carbonate, diallyl malonate, diallyl oxalate, diallyl adipate, diallyl sebacate, divinyl sebacate, diallyl tartrate, diallyl silicate, triallyl tricarballylate, triallyl aconitate, triallyl citrate, and triallyl phosphate, N,N'-methylene-diacrylamide, N,N'-methylene-dimethacrylamide, N,N'-ethylenediacrylamide, trivinylbenzene, trivinylnapthalenes, vinylanthracenes, including styrene, vinyl pyridine, vinyl naphthalene, vinyl toluene, phenyl acrylate, vinyl xylenes, ethylvinylbenzene, divinyl pyridine, divinyl naphthalene, divinylbenzene, trivinylbenzene, alkyldivinylbenzenes having from 1 to 4 alkyl groups of 1 to 6 carbon atoms substituted in the benzene nucleus, and alkyltrivinylbenzenes having 1 to 3 allyl groups of 1 to 3 carbon atoms substituted in the benzene nucleus. Further examples include aromatic diacids and their derivatives (the esters, anhydrides and acid chlorides) including phthalic acid, phthalic anhydride, terephthalic acid, isophthalic acid, dimethylphthalate, aliphatic dibasic acids such as maleic acid, fumaric acid, itaconic acid, 1,1-cyclobutane-dicarboxylic acid, aliphatic diamines such as piperazine, 2-methylpiperazine, cis, cis-bis (4-aminocyclohexyl) methane, metaxylylenediamine, glycols such as diethylene glycol, triethylene glycol, 1,2-butanediol, neopentyl glycol, bischloro-formates such as cis and trans-1,4-cyclohexylbis-cbloroformate, 2,2,2,4-tetra-methyl-1,3-cyclobutyl bischloroformate and bischloroformates of other glycols above listed, hydroxy acids such as salicylic acid, m- and p-hydroxy-benzoic acid and lactones, derived therefrom such as the propiolactones, valerolactones, caprolactones, diisocyantes such as cis and transcyclopropane-1,2-diisocyanate, cis and trans-cyclobutane-1,2-diisocyanate, phenol and derivatives of phenol, including, alkylphenols, polyfunctional cross-linking agents such as tri- or poly basic acids such as trimellitic acid, tri- or polyols such as glycerol, tri- or polyamines such as diethylenetriamine; and other condensation monomers and mixtures of thereof, aromatic diamines such as benzidine, 4,4'-methylenediamine, bis(4-amino-phenyl)ether, bisphenols such as bisphenol A, bisphenol C, bisphenol F, phenolphthalein, resorcinol, bisphenol bis(chloroformates) such as bisphenol A bis(chloroformate), 4,4'-dihydroxybenzophenone bis(chloroformate), carbonyl and thiocarbonyl compounds such as formaldehyde, acetaldehyde thioacetone acetone. Examples of further monomers that may be used as cross linking agents are given in J. Brandup and E. H. Immergut, "Polymer Handbook", 3rd Edition, John Wiley and Sons, New York, 1989, the contents of which are incorporated herein by cross reference. For given set of circumstances, the amount of cross-linking agent to be used (typically 0.01-25wt%, more typically 0.5-10wt% and even more typically 0.75-5wt%) may be readily determined by trial an error without undue experimentation.

To facilitate cross-linking an initiator such as dicumyl peroxide, for example, is used in concentrations of 0.01-10wt% of the elastomeric polymer. Further examples of polymer initiators may be found in "Plastics Additives", E. W. Flick, Noyes Publications, Park Ridge, New Jersey 1986, "Compounding Materials for the Polymer Industries", J. S. Dick, Noyes Publications, Park Ridge, New Jersey 1987, "Chemical Additives for the Plastics Industry", Radian Corporation, Noyes Publications, Park Ridge, New Jersey 1987, "Polymer Handbook", editors J. Brandrup and E.H. Immergut, 3rd edition, John Wiley & Sons, New York, 1989, "Encyclopedia of Chemical Technology", Kirk-Othmer, 3rd Edition, John Wiley & Sons, New York, and "Handbook of Plastics Materials and Technology", editor Irvin I. Rubin, John Wiley & Sons, New York, 1990, the contents of which are incorporated herein by cross reference.

Other plastic additives such as fillers, lubricants, reinforcements, coupling agents, plasticizers,, heat stabilizers and antioxidants may be used in the carbon-plastic electrodes of the invention. Examples of such additives are described in "Plastics Additives", E. W. Flick, Noyes Publications, Park Ridge, New Jersey 1986, "Polymer Handbook", editors J. Brandrup and E.H. Immergut, 3rd edition, John Wiley & Sons, New York, 1989, "Compounding Materials for the Polymer Industries", J. S. Dick, Noyes Publications, Park Ridge, New Jersey 1987, "Handbook of Plastics Materials and Technology", editor Irvin I. Rubin, John Wiley & Sons, New York, 1990, and "Chemical Additives for the Plastics Industry", Radian Corporation, Noyes Publications, Park Ridge, New Jersey 1987, the contents of which are incorporated herein by cross reference.

Generally, the flexible, conducting plastic electrode material comprises:

| | |
|---|---|
| thermo-plastic polymer | 30wt% -60wt%; |
| elastomeric polymer cross-linked with thermoplastic polymer | 10wt% -30wt%; |
| conductive filler material | 5-50wt%: and |
| graphite felt (heat and pressure fused onto at least one surface of the electrode) metal mesh/foil (heat and pressure fused onto a surface of the electrode). | |

In one preferred form the flexible, conducting plastic electrode material comprises:

| | |
|---|---|
| thermo-plastic polymer | 30wt% -60wt%; |
| elastomeric polymer cross-linked with thermoplastic polymer | 10wt% -30wt%; |
| conductive filler material | 5-40wt%; |
| cross-linking agent | 1-10wt%; and |
| graphite felt (heat and pressure fused onto at least one surface of the electrode) metal mesh/foil (heat and pressure fused onto a surface of the electrode). | |

In a particularly preferred embodiment, the flexible, conducting plastic electrode material is comprised of:

| | |
|---|---|
| HDPE | 30wt% - 60wt% |
| SEBS block copolymer cross-linked with HDPE | 0.1wt% - 30wt% |
| carbon black (fine powder, 13nm) | 10wt% |
| carbon black (coarse powder. > 35nm. typically 35nm-10,000nm) | 10wt% |
| graphite fibre (3mm in length) | 20wt% |
| polymer initiator (used in preparation process) | 0.00 -5 wt%, typically 0.1wt% -2wt% of the SBS copolymer |

In a second preferred embodiment of the invention the electrode comprises:

| | |
|---|---|
| HDPE | 20wt% |
| SEBS block copolymer cross-linked with HDPE | 20wt% |
| graphite fibre | 60wt% |
| polymer initiator (used in preparation process) | 0.00wt% - 2wt% of the SEBS copolymer |

Generally, the polyblend of thermo-plastic and elastomeric polymer is made by mixing the polymers in a suitable mixer at temperatures above the melting temperatures (Tₘ) of each constituent. More particularly, the polyblend of thermo-plastic and styrenic block copolymer is made by mixing the polymers in a suitable mixer at temperatures above the melting temperatures (Tₘ) of each constituent. Typically, the thermo-plastic, styrenic block copolymer and carbon black particles are blended in an internal mixer at 170-225°C for approximately 20 minutes. This mixture is preheated at 220°C for 20 minutes then pressure-moulded at 220°C and 200-250 Kg/cm² for approximately 30 minutes to form a thin flexible, conducting carbon-plastic sheet. The thin carbon-plastic sheet prepared by this method is characterised by more than 10% elongation and less than 0.3 ohm.cm in electrical resistivity. By heat-pressing a copper mesh on one side and heat-bonding a graphite felt on the other side, an end-electrode for a redox battery is completed. By heat-bonding a graphite felt on both sides, a bipolar electrode for a redox battery is completed.

The advantages of the electrode composite of the invention are its relatively low cost of manufacture, good electrical conductivity, physical strength, flexibility, low solution permeability when utilised in systems such as the vanadium redox flow battery and long chemical stability.

### BRIEF DESCRIPTION OF THE DRAWINGS

The preferred embodiments of the invention are described in more detail with reference to the following drawings:
Fig. 1 is a flowchart illustrating the manufacturing process for the carbon-plastic, bipolar and end-electrode assemblies to be employed in a vanadium redox battery;
Fig. 2 is a graph indicating the electrical and mechanical properties of the carbon-plastic electrode materials;
Fig. 3 is a graph showing the permeation behaviour of the carbon-plastic sheet in the electrolyte of the vanadium battery;
Fig. 4 is a graph showing the long-term stability of the electrode operating in the vanadium battery;
Fig. 5 is a microphotograph of a carbon-plastic surface which has been etched in a solution of 850 grams per litre H₂SO₄ + 30 grams CrO₃ + 60 grams H₂O at 60°C for 20 minutes so as to prepare it for subsequent activation by electrodepositing or chemically depositing an electroactive layer such as polypyrrole, polyaniline or a metal oxide; and
Fig. 6 is a flowchart illustrating the manufacturing process for carbon-plastic electrodes to be employed in electrodeposition of polypyrrole, polyaniline or metal oxides.

### BEST MODE AND OTHER MODES FOR CARRYING OUT THE INVENTION

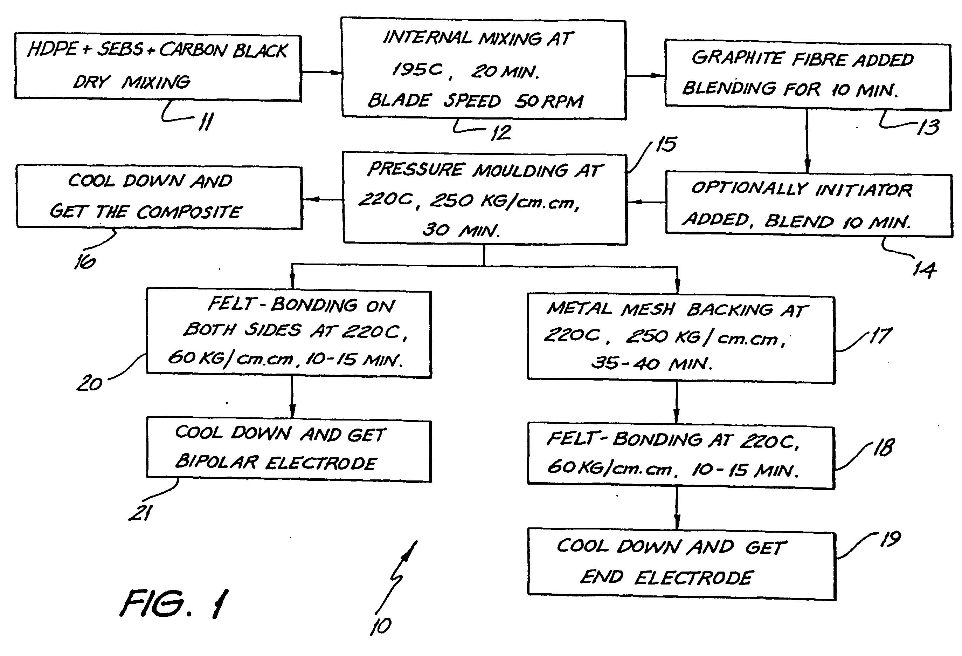

Referring to Fig. 1, a process for making a conducting plastic electrode, 10 comprises the initial step 11 of dry mixing high density polyethylene (20wt%), styrene-butadiene-styrene (20wt%) and carbon black (60wt%). This mixture is then blended 12 at a blade speed of 50 rpm in an internal mixer at 195°C for approximately twenty minutes. During the mixing in the internal mixer the mixture is not exposed to air. Graphite fibre is then slowly added to blended mixture 12 and blended 13 for approximately ten minutes. Polymerization initiator (0.00-0.15wt% of SBS) is added to the blended mixture of 13 and blended 14 for a few minutes. The resulting mixture is pressure-moulded 15 at 250 Kg/cm² and 180-220°C for at least thirty minutes.. The moulded material is cooled down rapidly 16 to get a thin, smooth, conductive and flexible carbon-plastic electrode sheet.

Referring to Fig. 1 and in particular steps 17, 18 and 19, an end-electrode is prepared by placing a metal mesh , preferably a copper or brass mesh, in the bottom of the mould. The carbon-plastic sheet is placed on top of the metal mesh and the mould is heated to approximately 220°C. The temperature is maintained for twenty minutes before applying a pressure of 250 Kg/cm² for fifteen minutes in step 17. A window is placed on the top of the hot carbon-plastic sheet and an electrochemically active layer, preferably a graphite felt layer, is placed in this window in step 18 and then a pressure of approximately 60 Kg/cm² is applied to the mould for approximately 10-15 minutes. The mould is then rapidly cooled in step 19 at 1-10°C/min to obtain a flexible, conducting carbon-plastic and graphite felt end-electrode.

In steps 20 and 21, a bipolar electrode is prepared by 20 placing a window (border about 0.5-8cm, typically 5-8cm, around electrode edges) on either side of the carbon-plastic sheet of 16 and then placing an electrochemically active layer, typically a graphite felt layer (typically 0.5-2.5cm thick), into each of the two windows and placing this into a mold. A pressure of approximately 60 Kg/cm² is applied to the mould for 10-15 minutes at approximately 220°C. The mould is then rapidly cooled 21 to obtain a conducting carbon-plastic and graphite felt bipolar electrode.

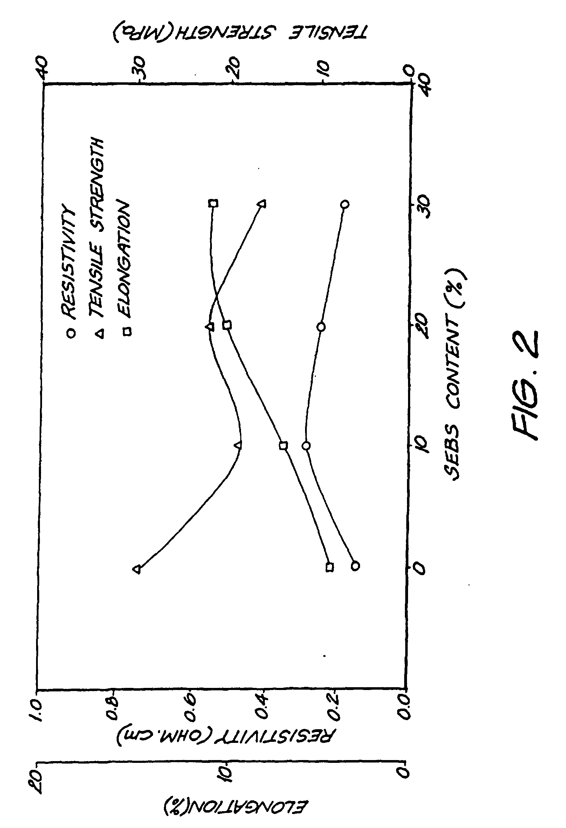

Figure 2 illustrates the influence which a styrenic block copolymer, styrene-ethene/butene-styrene (SEBS), has on the electrical and mechanical properties of the carbon-plastic material. The resistivity values of the different compositions of the SEBS block copolymer were determined by ASTM D-991. The mechanical properties of the different compositions of SEBS block copolymer were measured according to ASTM D-638. Referring to Fig. 2, the optimum composition of styrene-ethene/butene-styrene (SEBS) block copolymer with good electrical conductivity and good mechanical strength is around 20wt% .

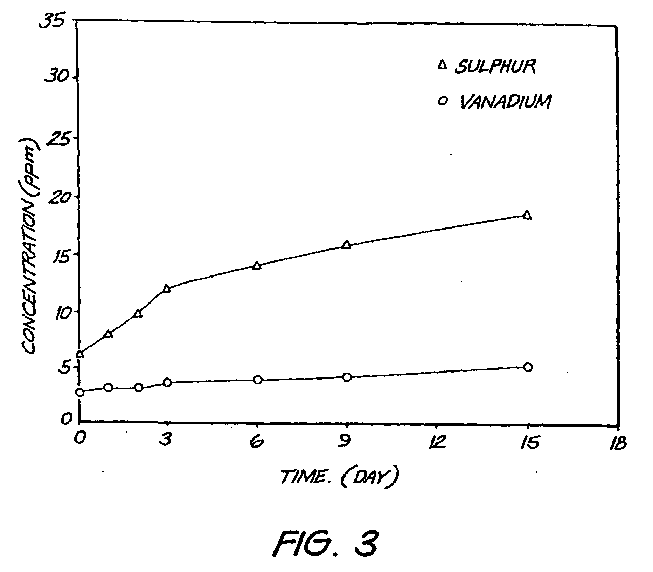

Figure 3 illustrates a graph of the permeation test results of a conducting carbon-plastic sheet prepared according to the process of Fig. 1. The testing was carried out on a 0.3 mm thin sheet of carbon-plastic. The sheet was used as a separator of a round cell. The solution in one side of the separator was 2 M VOSO₄ in 3 M H₂SO₄. The other side contained distilled water. On both sides of the separator the respective solutions were continuously pumped through the cell and solution samples were taken periodically from the distilled water side. The samples were then tested with inductively coupled plasma (ICP) method to determine the concentrations of vanadium and sulphur which relate to the permeation rate of the ions through the sheet.

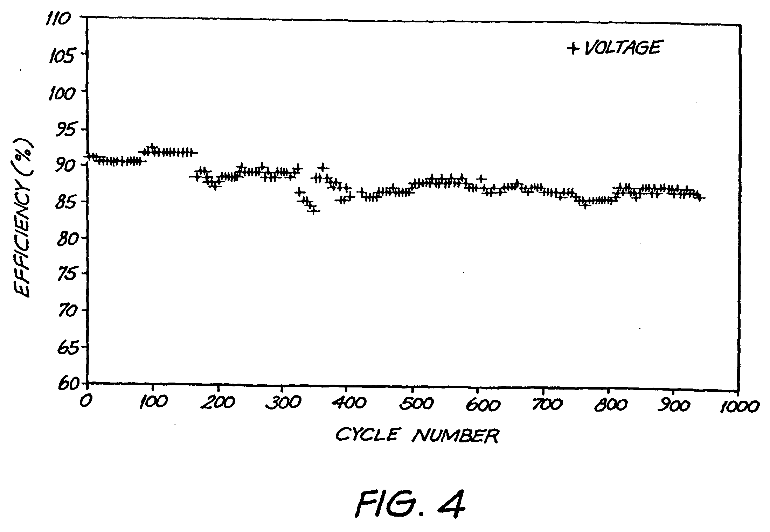

Figure 4 is a graph of the long-term performance of a vanadium redox cell with two electrodes manufactured according to the invention as described above. The voltage efficiencies which relate to the activity and resistivity of the electrode, varied less than 5 % over the operating period of 940 cycles of charging/discharging. The average time for one cycle is approximately four hours. Therefore, the total operating period was approximately 3760 hours. A drop of 5% efficiency over 3760 hours indicates that the electrode is substantially reactive and stable for the vanadium redox battery.

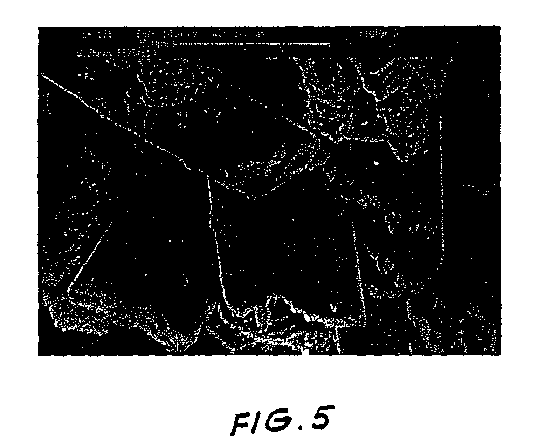

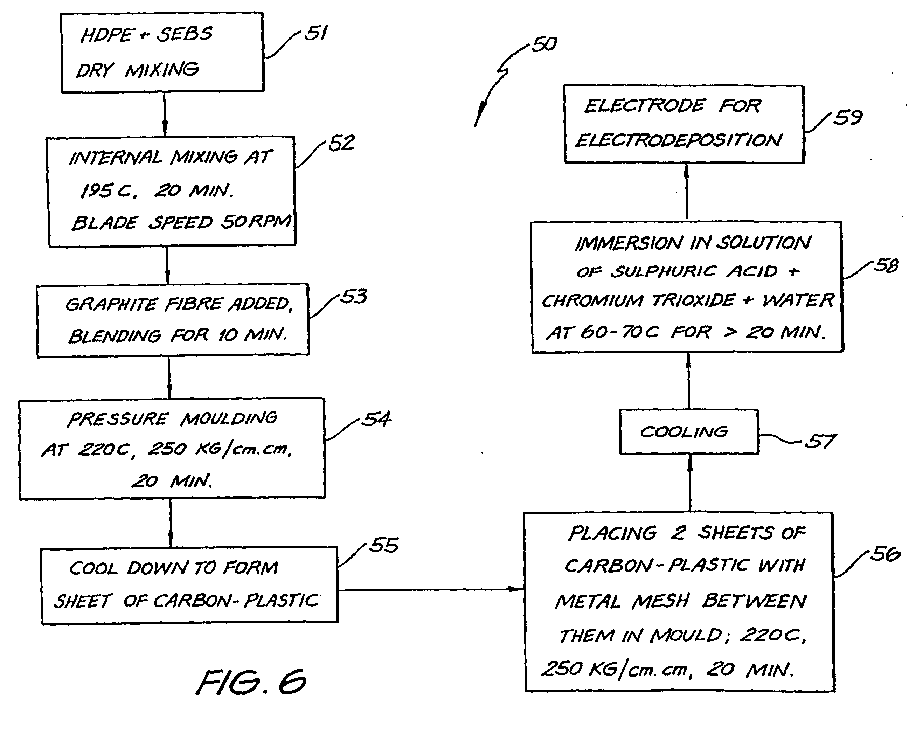

Referring to Fig. 5, a photograph of an electrode suitable for electrodeposition after it has been etched in a solution of H₂SO₄, CrO₃ and H₂O is shown. The electrode is comprised of 20% high density polyethylene, 20wt% SEBS, and 60wt% graphite fibre and is prepared according to process 50 depicted in Fig. 6. Referring to Fig. 6 HDPE and SEBS are dry mixed 51 and blended 52 in a internal mixer at 195°C for approximately 20 minutes at a blade speed of 50 rpm. Graphite fibre is slowly added in step 53 to the mixture of step 52 and blended for about 10 minutes. The mixture of step 53 is pressure moulded 54 at 250 Kg/cm² for 30 minutes at a temperature of 220°C. The mixture of step 54 is cooled down rapidly 55 to form a thin, conducting, smooth and flexible carbon-plastic sheet of carbon-plastic. A metal mesh is placed between two sheets of carbon plastic in step 56 and pressure molded at 250 Kg/cm² and 220°C for 20 minutes. The mold is cooled in step 57 and immersed in a solution of 850-950 g/l H₂SO₄, 20-40 g/l CrO₃ (or K₂Cr₂O₇), 50-70 g/l H₂O at 60-70°C for at least 20 minutes to form an electrode for electrodeposition of polypyrrole, polyaniline or metal oxides.

The following example is provided by way of illustration and is not intended to limit the invention in any way.

### EXAMPLE 1

Twenty grams of high density polyethylene, sold under the trade name of GM 7665 by the Hostalen Chemical Comp., 10 grams of styrene-ethene/butene-styrene (SEBS) block copolymer, sold under the name of Kraton G1652 by Shell Chemical Australia Pty. Ltd.. 5 grams fine carbon black, sold under the name of FW 200 and 5 grams coarse carbon black, sold under the name of XE-2 by Degussa Australia Pty. Ltd.. 10 grams of graphite fibre, sold under the name of c-203s by Kureha Chemical Industry Co., Ltd. and 0.1 grams of dicumyl peroxide were blended inside an internal mixer at 195°C for 20 minutes. The mixture was placed into a compression mould and moulded into 21x21 cm² plate under 250 Kg/cm² pressure at 220°C for 30 minutes. The mould was rapidly cooled down to room temperature. The formed sheet had a compressed thickness of 0.7 mm, an electrical resistivity of 0.24 ohm.cm, tensile strength of 21.8 N/mm² and elongation of 10.1 %. The end-electrodes were fabricated by placing an equal sized brass mesh under the carbon-plastic sheet in the mould, heating up the mould to 220°C and applying a pressure of 250 Kg/cm² for 10 minutes. The cover of the mould was then replaced by a rectangular shaped window, and a piece of graphite felt sized 12x 11.5cm² was put into the window of the same dimensions. A 60 Kg/cm² pressure was applied to the mould for 10 minutes at 220°C. The mould was rapidly cooled to obtain an end-electrode for a redox electrolysis cell. The formed end-electrode had electrical resistance of 0.7 ohm.cm². Two of these end-electrodes have been used in the vanadium battery for more than 3760 hours with recorded voltage efficiencies of approximately 88%.

### ADDITIONAL EXAMPLES

Conductive graphite fibre have been used successfully to increase the electrical conductivity of carbon-polyethylene composite materials as electrode matrix layer. However, their incorporation results in an increasing melt viscosity and difficult processing. The fabrication of extrudable conductive electrodes requires to reduce graphite fibre content, on the other hand, this can result in a higher resistant material. The purpose of this work was to find materials and compound with the highest conductivity, chemical resistant, flexibility and extrudability.

### 1. Electrical Conductivity of High Density Polyethylene (HDPE)

### 1.1 Comparison of HDPE types:

To increase the processability of the compounds, two higher melt flow index HDPE were used. From Table 1 it can be said that the new HDPE materials have better melt flow index and conductivity.

| **Materials** | **Weight%** |
|---|---|
| HDPE | 40% |
| SEBS* Rubber | 20 % |
| Carbon Black | 20% |
| Graphite Fibre | 20 % |

| | |
|---|---|
| *. Styrene-Ethene-Butene-Styrene Rubber | |

**Table 1.**

| **Comparison of HDPE types.** | | | | | | | |
|---|---|---|---|---|---|---|---|
| **HDPE TYPE** | **MFI (190/2)** | **MFI (190/5)** | **Sample 1 volume resistivity** | **Sample 2 volume resistivity** | **Average Resistivity (Ω.cm)** | **Physical Property** | **Result** |
| GM 7655 | 0.2 | 0.6 | 0.240 | 0.240 | 0.240 | Good | Very low MFI |
| GD 7255 | 3.5 | 12 | 0.260 | 0.219 | 0.239 | Flexible | Good |
| GC 7260 | 7.0 | 23 | 0.316 | 0.271 | 0.293 | Flexible | This is the best one (low resistivity and highest MFI) |

### 1.2 The effects of rubbers:

To study the effect of rubber electrical resistivity and also to decrease the resistivity of the composite, four kinds of rubber with different resistivities were used.

| **Materials** | **Weight%** |
|---|---|
| HDPE (GM 7655) | 40% |
| Rubber | 20% |
| Carbon Black | 20% |
| Graphite Fibre | 20% |

**Table 2.**

| **The effects of various rubbers upon composite conductivity** | | | | | | |
|---|---|---|---|---|---|---|
| **Rubber** | **Electrical Resistivity of Rubber** | **Sample 1 volume resistivity** | **Sample 2 volume resistivity** | **Average Resistivity (Ω.cm)** | **Physical Property** | **Result** |
| NBR* | Low | 0.242 | 0.384 | 0.313 | Rigid -Tough | Good restivity and good physical properties but needs more tests |
| Santoprene | High | 3.741 | 3.179 | 3.460 | Cracked | (High resistivity and weak properties) |
| EPDM** (2504) | High | 5.027 | 2.955 | 3.991 | semi-flexible | (High resistivity) |
| EPDM (2504) | High | 0.219 | 0.512 | 0.366 | Tough-flexible with uniform surface | Good material (it can be improved) |

| | | | | | | |
|---|---|---|---|---|---|---|
| *. Acrylonitrile-Butadiene Rubber | | | | | | |
| **. Ethylene-Propylene-Diene Rubber | | | | | | |

As is shown in Table 2, the best rubber after SEBS are NBR and EPDM (Vistalon 2504). Although the resistivity of NBR is lower than EPDM but after mixing with other components, EPDM (Vistalon 2504) showed better general properties.

### 1.3 The effects of different grades of Carbon Black:

As a result of the comparing of the HDPE grades, HDPE (GC 7260) was chosen and then different types of carbon black were mixed to find the best properties. It was observed that Vulcan XC 72 and 72R were the best materials with good properties. However, to optimise the types and amount of carbon black, this part of experiments needs more materials, information and work.

| **Materials** | **Weight%** |
|---|---|
| HDPE (GC 7260) | 40% |
| Rubber | 20% |
| Carbon Black | 20% |
| Graphite Fibre | 20% |

**Table 3.**

| **The effects of different grades of Carbon Black** | | | | | |
|---|---|---|---|---|---|
| **Carbon Black Type** | **Sample 1 volume resistivity** | **Sample 2 volume resistivity** | **Average Resistivity** | **Physical Property** | **Description** |
| Degussa (10% XE,2 + 10% FW.200) | 0.240 | 0.240 | 0.240 | Good | Good |
| ACARBP | 0.278 | 0.467 | 0.372 | Cracked (Brittle) | Less than optimum |
| Vulcan XC 72 | 0.298 | 0.267 | 0.282 | Flexible with uniform surface | Suitable material with lowest resistivity |
| Vulcan XC 72R | 0.408 | 0.351 | 0.378 | Better flexibility and surface uniformity | Because of insufficient material, w/w was 15% |

### 2. Electrical Conductivity of Polypropylene (PP):

### 2.1 Homopolymer of PP:

For easier processing. high melt flow index (MFI=40) Propathene LZM60CR (homopolymer) was used. Meanwhile, to compare with the other results, instead of Vulcan carbon black, Degussa mixed carbon black (XE2 + FW200) and graphite fibre were added.

| **Materials** | **Weight%** |
|---|---|
| PP | 40 % |
| Rubber | 20% |
| Carbon Black | 20% |
| Graphite Fibre | 20% |

**Table 4.**

| **The effects of different rubbers on the physical properties of carbon-pp composite** | | | | | |
|---|---|---|---|---|---|
| **Rubber Type** | **Sample 1 volume resistivity** | **Sample 2 volume resistivity** | **Average resistivity (Ω.cm)** | **Physical Property** | **Description** |
| NBR | 0.983 | 0.753 | 0.859 | Cracked (brittle) | Unsuitable |
| SEBS | 0.415 | 0.512 | 0.464 | Flexible | One of the best samples with semi-tough property, but needs more test to reduce resistivity and also replacing of SEBS with EPDM may be resulted to better properties |

### 2.1 Copolymer of PP:

To study the roll of a PP-copolymer, Propathene LZM197CR - MFI=40 was used in the same conditions.

| **Materials** | **Weight%** |
|---|---|
| CO-PP | 40 % |
| Rubber | 20 % |
| Carbon Black | 20% |
| Graphite Fibre | 20% |

**Table 5.**

| **The effects of different rubbers on the physical properties of carbon- copolymer composite.** | | | | | |
|---|---|---|---|---|---|
| **Rubber Type** | **Sample 1 volume resistivity** | **Sample 2 volume resistivity** | **Average resistivity (Ω.cm)** | **Physical Property** | **Description** |
| NBR | 0.751 | -- | 0.751 | Cracked (brittle) | Unsuitable |
| SEBS | 0.218 | 0.136 | 0.177 | brittle, with some small cracks on one side | Although the physical properties are weak but very low resistance cause making and testing more samples |
| | | | | | |

### 1. Electrical Conductivity of Poly Vinylchloride (PVC):

Generally, vinyls will withstand continuous exposure to temperature ranging up to 130°F; flexible types, filaments, and some rigid are unaffected even by higher temperature up to 200°F. One of the basic advantages is the way it accepts compounding ingredients. For instance, PVC can be plasticised with a variety of plasticiser to produce soft, yielding materials to almost any desired degree of flexibility. PVC raw materials are available as resin, latexes organosols, plastisols, and compounds.

PVC is extremely resistant to inorganic acids such as hydrochloridric, nitric, phosphoric, and concentrated sulfuric acids. The fatty acids, stearic, oleic, and lionelic, have little effect upon PVC at ambient temperatures. Rigid PVC is extremely resist to oxidising agents such as strong sulfuric, nitric, chromic acids, hydrogen peroxide, and sodium hypochlorite. The common solvents such as ketones, esters, ethers, chlorinated hydrocarbons, and aromatic hydrocarbons soften and in some instances dissolve rigid PVC. Alcohols and aliphatic hydrocarbons have little effect upon PVC. It is completely resistant to all common animal, mineral, and vegetable oils. (Haper. C.A., handbook of plastics and elastomers, McGraw-Hill Book Co. 1975).

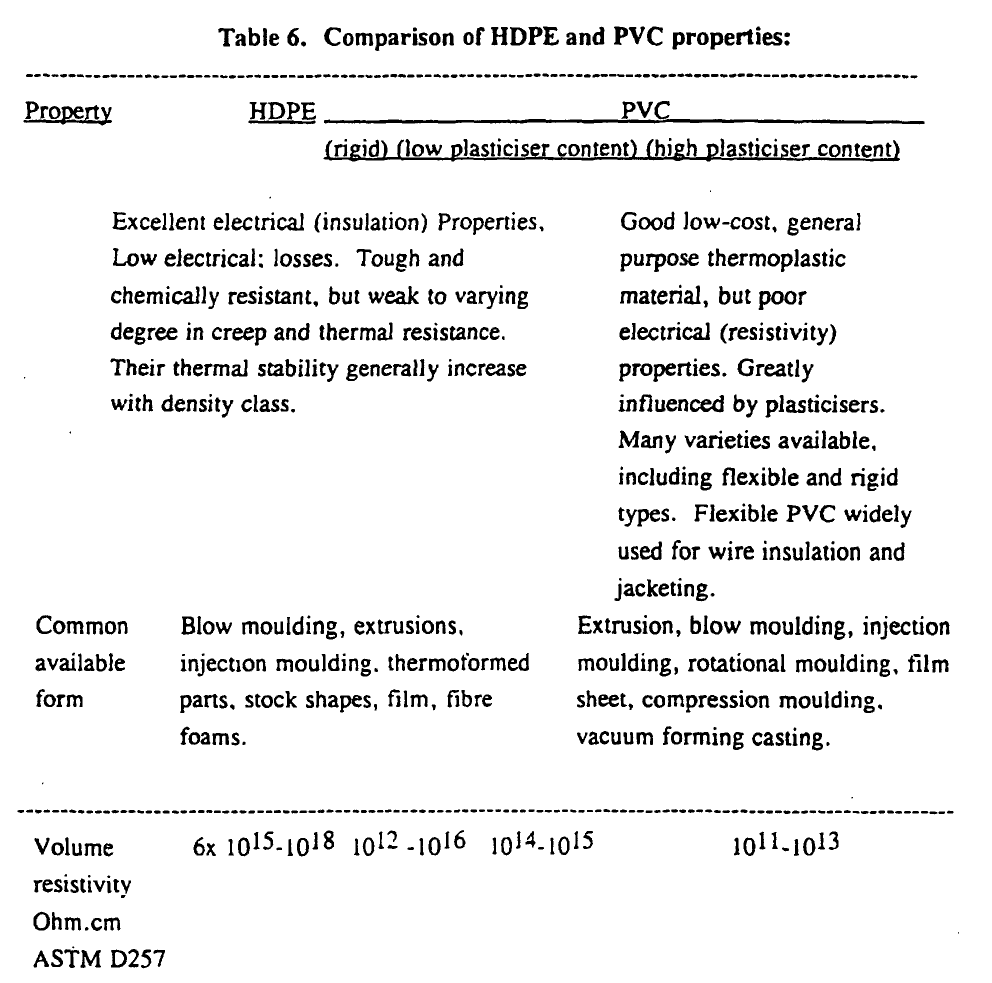

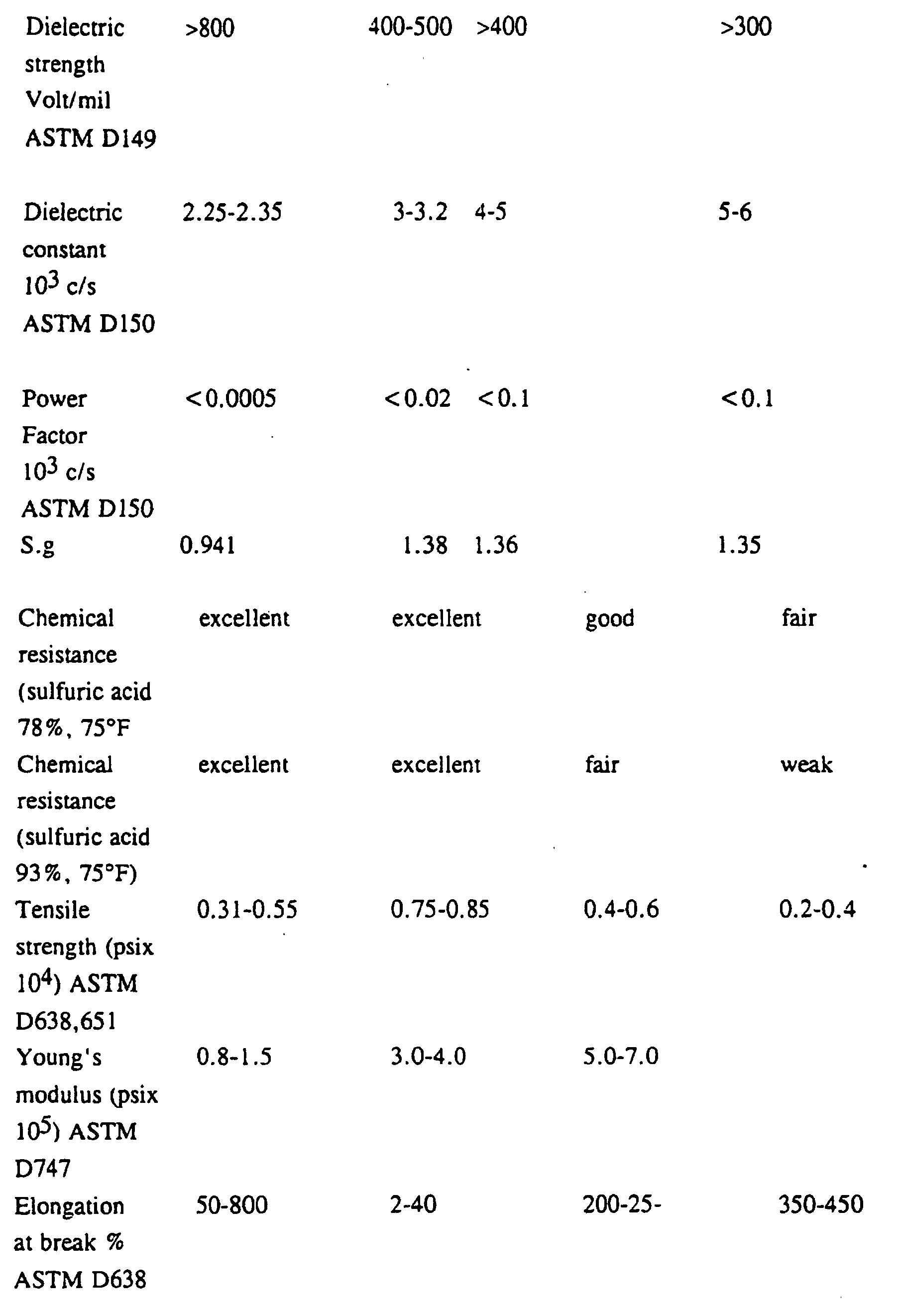

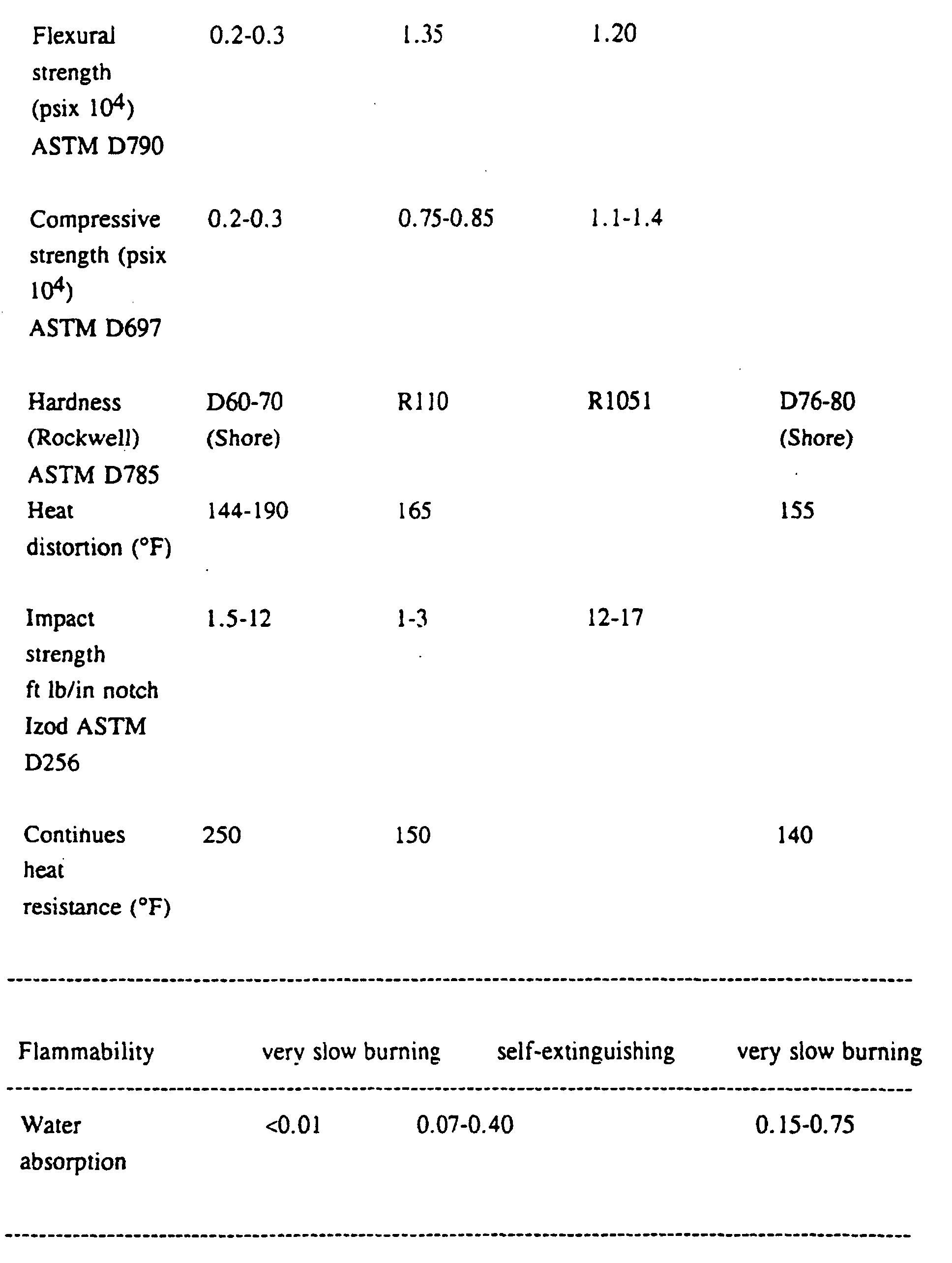

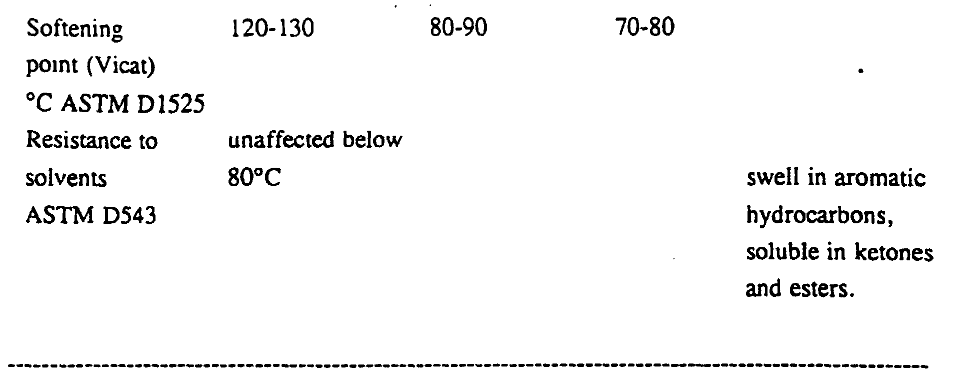

Due to very difficult processing of pure PVC, Experimental 7102 01 (ICI) was used.

| **Materials** | **Weight%** |
|---|---|
| PVC | 40% |
| Rubber | 20% |
| Carbon Black | 20% |
| Graphite Fibre | 20% |

**Table 7.**

| **The effects of different rubbers on the physical properties of carbon-PVC composite.** | | | | | |
|---|---|---|---|---|---|
| **Rubber Type** | **Sample 1 volume resistivity** | **Sample 2 volume resistivity** | **Average resistivity (Ω.cm)** | **Physical Property** | **Description** |
| NBR | 0.486 | 0.626 | 0.556 | It seems tough | It needs more test |
| SEBS | 0.212 | 0.800 | 0.508 | Brittle, but without cracks | It seems that polymer could not mix with graphite fibre very well. So it may be because of unsuitable mixing and then moulding temperature or polarity of one of the components. However it needs more testing. |

| **Preferred Materials** | | | | |
|---|---|---|---|---|
| **1.** | **Carbon Black** | | | |
| | 1. | Degussa FW 200 | | |
| | 2. | Degussa Printex x E | | |
| | 3. | Vulcan 72 x C | s | (Cabot) |
| | 4. | Vulcan 72 x CR | | (Cabot) |
| | 5. | ACARBP | | (Cabot) |
| | 6. | Black Pearl 2000 | | (Cabot) |
| | 7. | Activated Cole | | |
| | 8. | Activated Carbon | | (Merck) |

| **2.** | **Graphite Powder** | | | |
|---|---|---|---|---|
| | 1. | Lonza | | |
| | 2. | Thai Gypsum | | |

| **3.** | **Plasticizer and Lubricant** | | | |
|---|---|---|---|---|
| | 1. | Wax op | | (Hoechst) |
| | 2. | Wax Pe520 | | (Hoechst) |
| | 3. | GMS Loxiol G12 | | (IEI) |
| | 4. | Loxiol G 15 | | (IEI) |

| **4.** | **Rubber** | | | |
|---|---|---|---|---|
| | 1. | NBR | | (Vistalon) |
| | 2. | EPR | 404 | (Vistalon) |
| | 3. | EPR | 504 | (Vistalon) |
| | 4. | EPR | 805 | (Vistalon) |
| | 5. | EPR | 808 | (Vistalon) |
| | 6. | EPDM | 2504 | (Vistalon) |
| | 7. | EPDM | 3708 | (Vistalon) |
| | 8. | EPDM | 7000 | (Vistalon) |
| | 9. | EPDM Santoprene | | |
| | 10. | SBS | K 1162 | (Shell-Keraton) |
| | 11. | SEBS | K1652 | (Shell-Keraton) |
| | 12. | SBS | Aldrich | |
| | 13. | EPR | VM42 | |
| | 14. | Isobutylene/CO/PE | BM x 42 | |
| | 15. | Butyl | | |

| **5.** | **Plastics** | | | |
|---|---|---|---|---|
| | 1. | prc (raw material) | | (ICI) |
| | 2. | prc dry blend | | (ICI) |
| | 3. | nylon u | | (ICI) |
| | 4. | nylon 6 | | (ICI) |
| | 5. | Epalex - Polyproplyenelcarbon black | | (Poly Pacific) |
| | 6. | LDPE | 21624 | (Hoechst) |
| | 7. | LDPE | 1711200 | (Hoechst) |
| | 8. | HDPE | 7260 | (Hoechst) |
| | 9. | HDPE | 7655 | (Hoechst) |
| | 10. | HDPE | 7260 H | (Hoechst) |
| | 11. | HDPE | 7255 | (Hoescht) |
| | 12. | PPW - Polypropylene - W | | (Hoechst) |
| | 13. | PPT - Polypropylene - T | | (Hoechst) |
| | 14. | PPI2m60CR | | (Hoechst) |
| | 15. | PP Copolymer (L2m 197CR) | | (Hoechst) |
| ICI - pp (Polypropylene) Unit | | | | |

### FURTHER EXAMPLE

### Preparation Procedure of Conductive Carbon Polymer Composite

350 grams of granulated composite:

| Typical formulation:- | | |
|---|---|---|
| 1. | HDPE: TPI TYPE G-2855 | 40wt% |
| 2. | Carbon Fiber : Besfight type HTA - C6-S | 20wt% |
| 3. | Graphite powder : from graphite electrode grinding | 20wt% |
| 4. | SEBS : Shell G-1652 | 20wt% |

is spread onto a 0.75 x 420 x 620 mm mould and then the mould is covered on. The mould is placed onto a hydraulic-hot-press and, under no pressure. it is heated up to 170°C for 30 minutes, then the pressure is slowly increased up to 45 tons for another 30 minutes, then the moulded composite material is cooled down to room temperature (2 hours) to obtain the thin, smooth and flexible carbon-polymer sheet.

To prepare an end-electrode. a metal mesh (such as copper) is placed in the bottom of the mould. The carbon-plastic sheet is placed on top and the mould heated up to 170°C. The temperature is maintained for 30 minutes before applying the same pressure of 45 tons for 60 minutes. While keeping the hot carbon-plastic sheet with the metal mesh backing in mould, a 300 x 500 mm window is placed on the top of the hot sheet and a graphite felt is placed in the window. A pressure of a 2 tons is then applied to the mould with the window, and this is maintained for 30 minutes. The mould is then cooled down to room temperature to obtain the carbon-plastic and graphite felt composite end-electrode.

To manufacture a bipolar electrode, two windows, are required. Placing the two windows on both sides of the prepared composite carbon-plastic sheet, two pieces of electrochemically active layers (graphite felt) are placed into the two windows. By following the same procedure of bonding felt for the end-electrode, a bipolar electrode can be obtained.

### INDUSTRIAL APPLICABILITY

The electrodes of the invention may be further processed to produce bipolar electrodes and end-electrodes. An electrode of the invention may be can be utilized in vanadium redox cells and in electrodepositing of polypyrrole, polyaniline or metal oxides.

## Claims

1. A conducting electrode comprising a flexible conducting plastic material and a further electrode component which is a metal mesh, a metal sheet, a metal foil, or a graphite felt; wherein the plastic material comprises:
a. a conductive filler material;
b. a thermoplastic polymer which has moderate to high crystallinity or a glass temperature (Tg) above the operating conditions of the electrode; and
c. an elastomeric polymer;
wherein the amount of a. is such that the plastic material has a resistivity of no more than 3.991 ohm.cm and the degree of crosslinking of b. with c. is such that the electrode is flexible and has high tensile strength, and wherein the said further electrode component is pressure and heat welded in a configuration which is
(i) onto at least one surface of the flexible conducting plastic material,
(ii) a metal foil between two layers of the said conducting plastic material, or
(iii) a metal mesh between two layers of the conducting plastic material.

2. The electrode according to claim 1 wherein the further electrode component is pressure and heat welded in a configuration which is
(i) a metal mesh onto one surface of the flexible conducting plastic material;
(ii) a metal mesh onto one surface of the flexible conducting plastic material and a graphite felt onto the other surface of the conducting plastic material;
(iii) a graphite felt onto at least one surface of the conducting plastic material; or
(iv) a metal mesh, sheet or foil between two layers of the conducting plastic material.

3. The electrode according to claim 1 or claim 2 wherein the further electrode component is a graphite felt.

4. The electrode of claim 1 or claim 2 wherein the filler material comprises carbon black, graphite, metal powder, metallized glass fibres, pitch-derived carbon fibres, graphite fibres, polyacrylonitrile-derived carbon fibres or polyacrylonitrile-derived graphite fibres.

5. The electrode of claim 4 wherein the filler material comprises carbon black in an amount of 10-70 wt% of the total plastic composition.

6. The electrode of claim 4 wherein the filler material comprises a mixture of carbon black and graphite fibres in a weight ratio of from 5:95 to 95:5 in an amount of 10-70 wt% of the total plastic composition.

7. The electrode of claim 6 wherein the ratio of carbon black to graphite fibres is 50:50 wt%.

8. The electrode of any one of claims 4 to 7 wherein at least two different types of carbon black are used, namely, fine carbon black powder (2-35nm) and coarse carbon black powder (35nm-10,000nm) in a weight ratio of fine carbon:coarse carbon of from 1:99 to 99:1.

9. The electrode of claim 4 wherein the electrode has a weight ratio of carbon black plus graphite fibres content to total polymer is 2:3.

10. The electrode of claim 1 or claim 2 wherein the thermo-plastic polymer constitutes from 10-80 wt% of the plastic material.

11. The electrode of any one of the preceding claims wherein the thermo-plastic polymer comprises low density polyethylene, high density polyethylene, polypropylene, polybutylene or polystyrene.

12. The electrode of any one of the preceding claims wherein the elastomeric polymer comprises one or more of styrene-isoprene-styrene, NBR, EPDM, EP, SB, EPR, n-butyl rubber, styrene-butadiene-styrene, santoprene, and styrene-(ethene-butene)-styrene.

13. The electrode of any one of claims 1, 2 or 12 wherein the elastomeric polymer constitutes from 1-50 wt% of the plastic material.

14. The electrode as claimed in any one of the preceding claims, wherein the electrode comprises:
thermoplastic polymer 30 wt%-60 wt%
elastomeric polymer crosslinked
with thermoplastic polymer 10 wt%-30 wt%
conductive filler material 5 wt%-40 wt%; and
graphite felt heat and pressure fused onto at least one surface of the electrode.

15. An electrode as claimed in any one of the preceding claims, wherein the elastomeric polymer is at least partially crosslinked with the thermoplastic polymer.

16. A process for making an electrode, comprising forming a flexible, conducting plastic electrode, the by
a. mixing a thermoplastic polymer, an elastomeric polymer and conductive filler material, the mixing being at a temperature(s) above the melting point temperatures of the thermoplastic polymer and the elastomeric polymer,
b. pressure moulding the mixture of a. at a temperature(s) above the melting temperatures of the thermoplastic polymer and the elastomeric polymer until the polymers are at least partially crosslinked wherein the degree of crosslinking of the thermoplastic polymer with the elastomeric polymer is such that the electrode is flexible and has high tensile strength, and
c. cooling the crosslinked polymerised mixture of b. to form the electrode; wherein the amount of the conductive filler material is such that the electrode has a resistivity of no more than 3.991 ohm.cm., and
d. pressure and heat welding at least one electrode material which is a metal mesh, metal sheet, a metal foil or a graphite felt onto at least one surface of the flexible, conducting plastic electrode.

17. The process of claim 16 wherein in step c. the polymerised mixture of b. is cooled rapidly.

18. The process of claim 16 or claim 17 further comprising
b. (i) adding a polymerisation initiator to the mixture of a., and
b. (ii) optionally adding at least one chemical additive to the mixture of a.

19. The process of any one of claims 16 to 18 wherein the filler material comprises one or more of carbon black, graphite, metal powder, metallized glass fibres, pitch-derived carbon fibres, graphite fibres, polyacrylonitrile-derived carbon fibres or polyacrylonitrile-derived graphite fibres.

20. The process of any one of claims 16 to 18 wherein the filler material is comprised of a mixture of carbon black and graphite fibres in a range of 10-70 wt% of the total plastic composition.

21. The process of any one of claims 16 to 18 wherein the elevated pressure is from 25-2500 Kg/cm².

22. The process of any one of claims 16 to 18 wherein during the elevated pressure step the temperature is from 150 to 750°C.

23. A flexible, conducting plastic electrode prepared by the process of any one of claims 16 to 22.

24. A conducting electrode comprising flexible conducting plastic material and a further electrode component which is a metal mesh, a metal sheet, a metal foil, or a graphite felt; wherein the plastic material comprises:
a. a conductive filler material;
b. a thermoplastic polymer which has moderate to high crystallinity or a glass temperature (Tg) above the operating conditions of the electrode; and
c. an elastomeric polymer;
wherein the amount of a. is such that the plastic material has a resistivity of no more than 3.991 ohm.cm and the relative amounts of a., b. and c. are such that the conducting plastic material is flexible and has a high tensile strength, and wherein said further electrode component is pressure and heat welded in a configuration which is
(i) onto at least one surface of the flexible conducting plastic material,
(ii) a metal foil between two layers of the conducting plastic material, or
(iii) a metal mesh between two layers of the conducting plastic material.

25. The electrode according to claim 24 wherein the further electrode component is pressure and heat welded in a configuration which is
(i) a metal mesh onto one surface of the flexible conducting plastic material;
(ii) a metal mesh onto one surface of the flexible conducting plastic material and a graphite felt onto the other surface of the conducting plastic material;
(iii) a graphite felt onto at least one surface of the conducting plastic material; or
(iv) a metal mesh, sheet or foil between two layers of the conducting plastic material.

26. The electrode according to claim 24 or claim 25 wherein the further electrode component is a graphite felt.

27. The electrode of claim 24 or claim 25 wherein the conductive filler material comprises carbon black, graphite, metal powder, metallized glass fibres, pitch-derived carbon fibres, graphite fibres, polyacrylonitrile-derived carbon fibres and polyacrylonitrile-derived graphite fibres.

28. The electrode of claim 27 wherein the conductive filler material comprises carbon black in an amount of 10-70 wt% of the total plastic composition.

29. The electrode of claim 27 wherein the conductive filler material comprises a mixture of carbon black and graphite fibres in a weight ratio in the range 5:95 to 95:5 in an amount of 10-70 wt% of the total plastic composition.

30. The electrode of claim 29 wherein the ratio of carbon black to graphite fibres is 50:50 wt%.

31. The electrode of any one of claims 27 to 30 wherein at least two different types of carbon black are used, namely, fine carbon black powder (2-35nm) and coarse carbon black powder (35nm-10,000nm) in a weight ratio of fine carbon:coarse carbon of from 1:99 to 99:1.

32. The electrode of claim 27 wherein the weight ratio of carbon black plus graphite fibres content to total polymer is 2:3.

33. The electrode of claim 24 or claim 25 wherein the thermo-plastic polymer is 10-80 wt% of the plastic material.

34. The electrode of any one of claims 24 to 33 wherein the thermo-plastic polymer is selected from the group consisting of low density polyethylene, high density polyethylene, polypropylene, polybutylene and polystyrene.

35. The electrode of any one of claims 24 to 34 wherein the elastomeric polymer includes at least one polymer selected from the group consisting of styrene-isoprene-styrene, NBR, EPDM, EP, SB, EPR, n-butyl rubber, styrene-butadiene-styrene, santoprene, and styrene-(ethene-butene)-styrene.

36. The electrode of any one of claims 24, 25 or 35 wherein the elastomeric polymer is from 1-50 wt% of the plastic material.

37. An all-vanadium redox battery having a positive compartment containing a catholyte in electrical contact with a positive electrode, the catholyte comprising an electrolyte containing tetravalent vanadium ions or pentavalent vanadium ions, a negative compartment containing an anolyte in electrical contact with a negative electrode, the anolyte comprising an electrolyte containing tetravalent vanadium ions, trivalent vanadium ions or divalent vanadium ions, and an ionic conducting separator disposed between the positive and negative compartments and in contact with the catholyte and anolyte to provide ionic communication therebetween and wherein the catholyte includes a salt of the formula VO(X)y where when y is 2 then X is selected from the group consisting of F, Br and Cl and when y is 1, then X is selected from the group consisting of SO₄ or O, V₂O₅, V₂O₃, V₂O₄, VO, VSO₄, VOSO₄, V₂(SO₄)₃, (VO₂)₂SO₄, and NH₄VO₃, and the concentration of the salt is 0.1M to 5.0M, and wherein at least one of the positive and negative electrodes is a conducting plastic electrode of any one of claims 2, 14 or 25.

38. Use of an electrode of any one of claims 2, 14 or 25 in an all-vanadium redox battery, wherein said all-vanadium redox battery comprises a positive compartment containing a catholyte in electrical contact with a positive electrode, the catholyte comprising an electrolyte containing tetravalent vanadium ions or pentavalent vanadium ions, a negative compartment containing an anolyte in electrical contact with a negative electrode, the anolyte comprising an electrolyte containing tetravalent vanadium ions, trivalent vanadium ions or divalent vanadium ions, and an ionic conducting separator disposed between the positive and negative compartments and in contact with the catholyte and anolyte to provide ionic communication therebetween and wherein the catholyte includes a salt of the formula VO(X)y where when y is 2 then X is selected from the group consisting of F, Br and Cl and when y is 1, then X is selected from the group consisting of SO₄ or O, V₂O₅, V₂O₃, V₂O₄, VO, VSO₄, VOSO₄, V₂(SO₄)₃, (VO₂)₂SO₄, and NH₄VO₃, and the concentration of the salt is 0.1M to 5.0M,

## Patentansprüche

1. Leitende Elektrode, umfassend ein biegsames, leitendes Kunststoffmaterial und eine weitere Elektrodenkomponente, bei der es sich um ein Metallsieb, ein Metallblech, eine Metallfolie oder einen Graphitfilz handelt, wobei das Kunststoffmaterial folgendes umfasst:
a. ein leitendes Füllmaterial;
b. ein thermoplastisches Polymer mit einer mäßigen bis hohen Kristallinität oder einer Glasübergangstemperatur (Tg) oberhalb der Betriebsbedingungen der Elektrode und
c. ein elastomeres Polymer;
wobei die Menge von a. so ist, dass das Kunststoffmaterial einen spezifischen Widerstand von nicht mehr als 3991 Ohm·cm aufweist und der Vernetzungsgrad von b. mit c. so ist, dass die Elektrode biegsam ist und eine hohe Zugfestigkeit aufweist, und wobei die weitere Elektrodenkomponente in einer Konfiguration druck- und wärmegeschweißt ist, die:
(i) sich auf wenigstens einer Fläche des biegsamen, leitenden Kunststoffmaterials befindet,
(ii) eine Metallfolie zwischen zwei Schichten des leitenden Kunststoffmaterials ist oder
(iii) ein Metallnetz zwischen zwei Schichten des leitenden Kunststoffmaterials ist.

2. Elektrode nach Anspruch 1, wobei die weitere Elektrodenkomponente in einer Konfiguration druck- und wärmegeschweißt ist, bei der es sich um folgendes handelt:
(i) ein Metallnetz auf einer Fläche des biegsamen, leitenden Kunststoffmaterials;
(ii) ein Metallnetz auf einer Fläche des biegsamen, leitenden Kunststoffmaterials und ein Graphitfilz auf der anderen Fläche des leitenden Kunststoffmaterials;
(iii) ein Graphitfilz auf wenigstens einer Fläche des leitenden Kunststoffmaterials oder
(iv) ein Metallnetz, -blech oder eine Metallfolie zwischen zwei Schichten des leitenden Kunststoffmaterials.

3. Elektrode nach Anspruch 1 oder Anspruch 2, wobei es sich bei der weiteren Elektrodenkomponente um einen Graphitfilz handelt.

4. Elektrode nach Anspruch 1 oder Anspruch 2, wobei das Füllmaterial Ruß, Graphit, Metallpulver, metallisierte Glasfasern, von Teer stammende Kohlenstofffasern, Graphitfasern, von Polyacrylnitril stammende Kohlenstofffasern oder von Polyacrylnitril stammende Graphitfasern umfasst.

5. Elektrode nach Anspruch 4, wobei das Füllmaterial Ruß in einer Menge von 10 - 70 Gew.-% der gesamten Kunststoffzusammensetzung umfasst.

6. Elektrode nach Anspruch 4, wobei das Füllmaterial eine Mischung aus Ruß und Graphitfasern in einem Gewichtsverhältnis von 5:95 bis 95:5 in einer Menge von 10 - 70 Gew.-% der gesamten Kunststoffzusammensetzung umfasst.

7. Elektrode nach Anspruch 6, wobei das Verhältnis von Ruß zu Graphitfasern 50:50 Gew.-% beträgt.

8. Elektrode nach einem der Ansprüche 4 bis 7, wobei wenigstens zwei verschiedene Rußtypen, nämlich feines Rußpulver (2 - 35 nm) und grobes Rußpulver (35 nm - 10 000 nm) in einem Gewichtsverhältnis von feinem Ruß:grobem Ruß von 1:99 bis 99:1 eingesetzt werden.

9. Elektrode nach Anspruch 4, wobei die Elektrode ein Massenverhältnis des Ruß- plus Graphitfaser-Gehalts zum gesamten Polymer von 2:3 aufweist.

10. Elektrode nach Anspruch 1 oder Anspruch 2, wobei das thermoplastische Polymer 10 - 80 Gew.-% des Kunststoffmaterials darstellt.

11. Elektrode nach einem der vorhergehenden Ansprüche, wobei das thermoplastische Polymer Polyethylen niedriger Dichte, Polyethylen hoher Dichte, Polypropylen, Polybutylen oder Polystyrol umfasst.

12. Elektrode nach einem der vorhergehenden Ansprüche, wobei das elastomere Polymer ein oder mehrere der Polymere Styrol-Isopren-Styrol, NBR, EPDM, EP, SB, EPR, n-Butyl-Kautschuk, Styrol-Butadien-Styrol, Santoprene und Styrol-(Ethen-Buten)-Styrol umfasst.

13. Elektrode nach einem der Ansprüche 1, 2 oder 12, wobei das elastomere Polymer 1 - 50 Gew.-% des Kunststoffmaterials darstellt.

14. Elektrode nach einem der vorhergehenden Ansprüche, wobei die Elektrode folgendes umfasst:
| | |
|---|---|
| thermoplastisches Polymer | 30 Gew.-% - 60 Gew.-% |
| mit thermoplastischem Polymer vernetztes elastomeres Polymer | 10 Gew.-% - 30 Gew.-% |
| leitfähiges Füllmaterial | 5 Gew.-% - 40 Gew.-% und |
Graphitfilz, der auf wenigstens eine Fläche der Elektrode wärme- und druckgeschmolzen ist.

15. Elektroden nach einem der vorhergehenden Ansprüche, wobei das elastomere Polymer wenigstens teilweise mit dem thermoplastischen Polymer vernetzt ist.

16. Verfahren zur Herstellung einer Elektrode, umfassend die Bildung einer biegsamen, leitenden Kunststoffelektrode durch das
a. Vermischen eines thermoplastischen Polymers, eines elastomeren Polymers und eines leitfähigen Füllmaterials, wobei das Vermischen bei einer Temperatur (bei Temperaturen) oberhalb der Schmelzpunkt-Temperaturen des thermoplastischen Polymers und des elastomeren Polymers erfolgt,
b. Druckformen der Mischung von a. bei einer Temperatur (bei Temperaturen) oberhalb der Schmelztemperaturen des thermoplastischen Polymers und des elastomeren Polymers, bis die Polymere wenigstens teilweise vernetzt sind, wobei der Vernetzungsgrad des thermoplastischen Polymers mit dem elastomeren Polymer so ist, dass die Elektrode biegsam ist und eine hohe Zugfestigkeit aufweist, und das
c. Abkühlen der vernetzten polymerisierten Mischung von b. unter Bildung der Elektrode, wobei die Menge des leitfähigen Füllmaterials so ist, dass die Elektrode einen spezifischen Widerstand von nicht mehr als 3991 Ohm·cm aufweist, und das
d. Druck- und Wärmeschweißen wenigstens eines Elektrodenmaterials, bei dem es sich um ein Metallnetz, Metallblech, eine Metallfolie oder einen Graphitfilz handelt, auf wenigstens eine Fläche der biegsamen, leitenden Kunststoffelektrode.

17. Verfahren nach Anspruch 16, wobei in Schritt c. die polymerisierte Mischung von b. schnell abgekühlt wird.

18. Verfahren nach Anspruch 16 oder Anspruch 17, weiterhin umfassend
b. (i) die Zugabe eines Polymerisationsinitiators zur Mischung von a. und
b. (ii) gegebenenfalls die Zugabe wenigstens eines chemischen Additivs zur Mischung von a.

19. Verfahren nach einem der Ansprüche 16 bis 18, wobei das Füllmaterial eines oder mehrere der Materialien Ruß, Graphit, Metallpulver, metallisierte Glasfasern, von Teer stammende Kohlenstofffasern, Graphitfasern, von Polyacrylnitril stammende Kohlenstofffasern oder von Polyacrylnitril stammende Graphitfasern umfasst.

20. Verfahren nach einem der Ansprüche 16 bis 18, wobei das Füllmaterial aus einer Mischung aus Ruß und Graphitfasern in einem Bereich von 10 - 70 Gew.-% der gesamten Kunststoffzusammensetzung besteht.

21. Verfahren nach einem der Ansprüche 16 bis 18, wobei der erhöhte Druck 15 - 2500 kg/cm² beträgt.

22. Verfahren nach einem der Ansprüche 16 bis 18, wobei die Temperatur während des Schritts mit erhöhtem Druck 150 bis 750 °C beträgt.

23. Biegsame, leitende Kunststoffelektrode, hergestellt durch das Verfahren nach einem der Ansprüche 16 bis 22.

24. Leitende Elektrode, umfassend ein biegsames, leitendes Kunststoffmaterial und eine weitere Elektrodenkomponente, bei der es sich um ein Metallnetz, ein Metallblech, eine Metallfolie oder einen Graphitfilz handelt, wobei das Kunststoffmaterial folgendes umfasst:
a. ein leitfähiges Füllmaterial;
b. ein thermoplastisches Polymer, das eine mäßige bis hohe Kristallinität oder eine Glasübergangstemperatur (Tg) oberhalb der Betriebsbedingungen der Elektrode aufweist, und
c. ein elastomeres Polymer;
wobei die Menge von a. so ist, dass das Kunststoffmaterial einen spezifischen Widerstand von nicht mehr als 3991 Ohm·cm aufweist und die relativen Mengen von a., b. und c. so sind, dass das leitende Kunststoffmaterial biegsam ist und eine hohe Zugfestigkeit aufweist, und wobei die weitere Elektrodenkomponente in einer Konfiguration druckund wärmegeschweißt ist, die:
(i) sich auf wenigstens einer Fläche des biegsamen, leitenden Kunststoffmaterials befindet,
(ii) eine Metallfolie zwischen zwei Schichten des leitenden Kunststoffmaterials ist oder
(iii) ein Metallnetz zwischen zwei Schichten des leitenden Kunststoffmaterials ist.

25. Elektrode nach Anspruch 24, wobei die weitere Elektrodenkomponente in einer Konfiguration druck- und wärmegeschweißt ist, bei der es sich um folgendes handelt:
(i) ein Metallnetz auf einer Fläche des biegsamen, leitenden Kunststoffmaterials;
(ii) ein Metallnetz auf einer Fläche des biegsamen, leitenden Kunststoffmaterials und ein Graphitfilz auf der anderen Fläche des leitenden Kunststoffmaterials;
(iii) ein Graphitfilz auf wenigstens einer Fläche des leitenden Kunststoffmaterials oder
(iv) ein Metallnetz, -blech oder eine Metallfolie zwischen zwei Schichten des leitenden Kunststoffmaterials.

26. Elektrode nach Anspruch 24 oder Anspruch 25, wobei es sich bei der weiteren Elektrodenkomponente um einen Graphitfilz handelt.

27. Elektrode nach Anspruch 24 oder Anspruch 25, wobei das Füllmaterial Ruß, Graphit, Metallpulver, metallisierte Glasfasern, von Teer stammende Kohlenstofffasern, Graphitfasern, von Polyacrylnitril stammende Kohlenstofffasern oder von Polyacrylnitril stammende Graphitfasern umfasst.

28. Elektrode nach Anspruch 27, wobei das Füllmaterial Ruß in einer Menge von 10 - 70 Gew.-% der gesamten Kunststoffzusammensetzung umfasst.

29. Elektrode nach Anspruch 27, wobei das Füllmaterial eine Mischung aus Ruß und Graphitfasern in einem Gewichtsverhältnis von 5:95 bis 95:5 in einer Menge von 10 - 70 Gew.-% der gesamten Kunststoffzusammensetzung umfasst.

30. Elektrode nach Anspruch 29, wobei das Verhältnis von Ruß zu Graphitfasern 50:50 Gew.-% beträgt.

31. Elektrode nach einem der Ansprüche 27 bis 30, wobei wenigstens zwei verschiedene Rußtypen, nämlich feines Rußpulver (2 - 35 nm) und grobes Rußpulver (35 nm - 10 000 nm) in einem Gewichtsverhältnis von feinem Ruß:grobem Ruß von 1:99 bis 99:1 eingesetzt werden.

32. Elektrode nach Anspruch 27, wobei die Elektrode ein Massenverhältnis des Ruß- plus Graphitfaser-Gehalts zum gesamten Polymer von 2:3 aufweist.

33. Elektrode nach Anspruch 24 oder Anspruch 25, wobei das thermoplastische Polymer 10 - 80 Gew.-% des Kunststoffmaterials darstellt.

34. Elektrode nach einem der Ansprüche 24 bis 33, wobei das thermoplastische Polymer Polyethylen niedriger Dichte, Polyethylen hoher Dichte, Polypropylen, Polybutylen oder Polystyrol umfasst.

35. Elektrode nach einem der Ansprüche 24 bis 33, wobei das elastomere Polymer ein oder mehrere der Polymere Styrol-Isopren-Styrol, NBR, EPDM, EP, SB, EPR, n-Butyl-Kautschuk, Styrol-Butadien-Styrol, Santoprene und Styrol-(Ethen-Buten)-Styrol umfasst.

36. Elektrode nach einem der Ansprüche 24, 25 oder 35, wobei das elastomere Polymer 1 - 50 Gew.-% des Kunststoffmaterials darstellt.

37. Ganzvanadium-Redoxbatterie mit einer Plus-Kammer, enthaltend einen in Kontakt mit einer Plus-Elektrode befindlichen Katholyten, wobei der Katholyt einen vierwertige Vanadiumionen oder fünfwertige Vanadiumionen enthaltenden Elektrolyten umfasst, eine Minus-Kammer, enthaltend einen in Kontakt mit einer Minus-Elektrode befindlichen Anolyten, wobei der Anolyt einen vierwertige Vanadiumionen, dreiwertige Vanadiumionen oder zweiwertige Vanadiumionen enthaltenden Elektrolyten umfasst, und einen ionenleitenden Separator, der zwischen der Plusund der Minus-Kammer angeordnet ist und sich in Kontakt mit dem Katholyten und dem Anolyten befindet, wodurch eine ionische Kommunikation dazwischen erhalten wird, und wobei der Katholyt ein Salz der Formel VO(X)_{y} einschließt, wobei, wenn y 2 ist, X aus der aus F, Br und Cl bestehenden Gruppe ausgewählt ist, und wenn y 1 ist, X aus der aus SO₄ oder O, V₂O₅, V₂O, V₂O₄, VO, VSO₄, VOSO₄, V₂(SO₄)₃, (VO₂)-₂SO₄ und NH₄VO₃ bestehenden Gruppe ausgewählt ist und wobei die Konzentration des Salzes 0,1 M bis 5,0 M beträgt und wobei wenigstens entweder die Plus- oder die Minus-Elektrode eine leitende Kunststoffelektrode eines der Ansprüche 2, 14 oder 25 ist.

38. Verwendung einer Elektrode nach einem der Ansprüche 2, 14 oder 25 in einer Ganzvanadium-Redoxbatterie, wobei die Ganzvanadium-Batterie eine Plus-Kammer, enthaltend einen in Kontakt mit einer Plus-Elektrode befindlichen Katholyten, wobei der Katholyt einen vierwertige Vanadiumionen oder fünfwertige Vanadiumionen enthaltenden Elektrolyten umfasst, eine Minus-Kammer, enthaltend einen in Kontakt mit einer Minus-Elektrode befindlichen Anolyten, wobei der Anolyt einen vierwertige Vanadiumionen, dreiwertige Vanadiumionen oder zweiwertige Vanadiumionen enthaltenden Elektrolyten umfasst, und einen ionenleitenden Separator, der zwischen der Plus- und der Minus-Kammer angeordnet ist und sich in Kontakt mit dem Katholyten und dem Anolyten befindet, umfasst, wodurch eine ionische Kommunikation dazwischen erhalten wird, und wobei der Katholyt ein Salz der Formel VO(X)_{y} einschließt, wobei, wenn y 2 ist, X aus der aus F, Br und Cl bestehenden Gruppe ausgewählt ist, und wenn y 1 ist, X aus der aus SO₄ oder O, V₂O₅, V₂O, V₂O₄, VO, VSO₄, VOSO₄, V₂(SO₄)₃, (VO₂)₂SO₄ und NH₄VO₃ bestehenden Gruppe ausgewählt ist und wobei die Konzentration des Salzes 0,1 M bis 5,0 M beträgt.

## Revendications

1. Electrode conductrice comprenant une matière plastique conductrice souple et un autre composant d'électrode qui est un maillage métallique, une toile métallique, une feuille métallique ou un feutre de graphite ; dans laquelle la matière plastique comprend :
a. une matière de remplissage conductrice ;
b. un polymère thermoplastique qui présente une cristallinité modérée à élevée ou une température de transition vitreuse (Tg) supérieure aux conditions de fonctionnement de l'électrode ; et
c. un polymère élastomère ;
dans laquelle la quantité de a. est telle que la matière plastique présente une résistivité qui n'est pas supérieure à 3,991 ohm.cm et le degré de réticulation de b. avec c. est tel que l'électrode est souple et présente une résistance à la traction élevée, et dans laquelle l'autre composant d'électrode est soudé à chaud et sous pression en une configuration qui est
(i) sur au moins une surface de la matière plastique conductrice souple,
(ii) une feuille métallique entre deux couches de ladite matière plastique conductrice, ou
(iii)un maillage métallique entre deux couches de la matière plastique conductrice.

2. Electrode selon la revendication 1, dans laquelle l'autre composant d'électrode est soudé à chaud et sous pression en une configuration qui est
(i) un maillage métallique sur une surface de la matière plastique conductrice souple,
(ii) un maillage métallique sur une surface de la matière plastique conductrice et un feutre de graphite sur l'autre surface de la matière plastique conductrice ;
(iii) un feutre de graphite sur au moins une surface de la matière plastique conductrice ; ou
(iv) un maillage, une toile, ou une feuille métallique entre deux couches de la matière plastique conductrice.

3. Electrode selon la revendication 1 ou la revendication 2, dans laquelle l'autre composant d'électrode est un feutre de graphite.

4. Electrode selon la revendication 1 ou la revendication 2, dans laquelle la matière de remplissage comprend du noir de carbone, du graphite, de la poudre métallique, des fibres de verre métallisées, des fibres de carbone dérivées de résine naturelle, des fibres de graphite, des fibres de carbone dérivées de polyacrylonitrile, ou des fibres de graphite dérivées de polyacrylonitrile.

5. Electrode selon la revendication 4, dans laquelle la matière de remplissage comprend du noir de carbone, en une quantité comprise entre 10 et 70 % en poids de la composition totale de plastique.

6. Electrode selon la revendication 4, dans laquelle la matière de remplissage comprend un mélange de noir de carbone et de fibres de graphite dans un rapport pondéral compris entre 5:95 et 95:5, en une quantité comprise entre 10 et 70 % en poids de la composition totale de plastique.

7. Electrode selon la revendication 6, dans laquelle le rapport de noir de carbone sur les fibres de graphite est de 50:50 % en poids.

8. Electrode selon l'une quelconque des revendications 4 à 7, dans laquelle au moins deux types différents de noir de carbone sont utilisés, en particulier, de la poudre fine de noir de carbone (2 à 35 nm) et de la poudre grossière de noir de carbone (35 à 10 000 nm) en un rapport pondéral de carbone fin/carbone grossier compris entre 1:99 et 99:1.

9. Electrode selon la revendication 4, dans laquelle l'électrode présente un rapport pondéral de la teneur en noir de carbone plus les fibres de graphite sur le polymère total de 2:3.

10. Electrode selon la revendication 1 ou la revendication 2, dans laquelle le polymère thermoplastique constitue entre 10 et 80 % en poids de la matière plastique.

11. Electrode selon l'une quelconque des revendications précédentes, dans laquelle le polymère thermoplastique comprend du polyéthylène basse densité, du polyéthylène haute densité, du polypropylène, du polybutylène ou du polystyrène.

12. Electrode selon l'une quelconque des revendications précédentes, dans laquelle le polymère élastomère comprend un ou plusieurs parmi le styrène-isoprène-styrène, le caoutchouc nitrile (NBR), l'éthylène-propylène (EPDM), le plastique époxydique (EP), le caoutchouc butadiène-styrène (SB), le caoutchouc éthylène-propylène (EPR), le caoutchouc de n-butyle, le styrène-butadiène-styrène, le santoprène et le styrène-(éthène-butène)-styrène.

13. Electrode selon l'une quelconque des revendications 1, 2 ou 12, dans laquelle le polymère élastomère constitue entre 1 et 50 % en poids de la matière plastique.

14. Electrode selon l'une quelconque des revendications précédentes, dans laquelle l'électrode comprend
| | |
|---|---|
| Polymère thermoplastique | 30 % en poids à 60 % en poids |
| Polymère élastomère réticulé avec du polymère thermoplastique | 10 % en poids à 30 % en poids |
| Matière de remplissage conductrice | 5 % en poids à 40 % en poids ; et |
du feutre de graphite fondu à chaud et sous pression sur au moins une surface de l'électrode.

15. Electrode selon l'une quelconque des revendications précédentes, dans laquelle le polymère élastomère est au moins partiellement réticulé avec le polymère thermoplastique.

16. Procédé de fabrication d'une électrode, comprenant la formation d'une électrode en plastique conductrice souple, comprenant les étapes suivantes :
a. mélange d'un polymère thermoplastique, d'un polymère élastomère et d'une matière de remplissage conductrice, le mélange étant fait à une température ou à des températures supérieure(s) aux températures du point de fusion du polymère thermoplastique et du polymère élastomère,
b. moulage sous pression du mélange de a. à une température ou à des températures supérieure(s) aux températures de fusion du polymère thermoplastique et du polymère élastomère, jusqu'à ce que les polymères soient au moins partiellement réticulés, dans lequel le degré de réticulation du polymère thermoplastique avec le polymère élastomère est tel que l'électrode est souple et présente une résistance à la traction élevée, et
c. refroidissement du mélange polymérisé réticulé de b. pour former l'électrode ; dans lequel la quantité de matière de remplissage conductrice est telle que l'électrode présente une résistivité qui n'est pas supérieure à 3,991 ohm.cm, et
d. soudage à chaud et sous pression d'au moins une matière d'électrode qui est un maillage métallique, une toile métallique, une feuille métallique ou un feutre de graphite sur au moins une surface de l'électrode en plastique conductrice souple.

17. Procédé selon la revendication 16, dans lequel, au cours de l'étape c. le mélange polymérisé de b. est refroidi rapidement.

18. Procédé selon la revendication 16 ou la revendication 17, comprenant en outre
b.(i) l'ajout d'un initiateur de polymérisation au mélange de a., et
b.(ii) l'ajout, éventuel, d'au moins un additif chimique au mélange de a.

19. Procédé selon l'une quelconque des revendications 16 à 18, dans lequel la matière de remplissage comprend un ou plusieurs parmi le noir de carbone, le graphite, la poudre métallique, les fibres de verre métallisées, les fibres de carbone dérivées de résine naturelle, les fibres de graphite, les fibres de carbone dérivées de polyacrylonitrile, ou les fibres de graphite dérivées de polyacrylonitrile.

20. Procédé selon l'une quelconque des revendications 16 à 18, dans lequel la matière de remplissage est constituée d'un mélange de noir de carbone et de fibres de graphite dans une plage comprise entre 10 et 70 % en poids de la composition totale de plastique.

21. Procédé selon l'une quelconque des revendications 16 à 18, dans lequel l'élévation de la pression est comprise entre 25 et 2500 kg/cm².

22. Procédé selon l'une quelconque des revendications 16 à 18, dans lequel, au cours de l'étape d'élévation de la pression, la température est comprise entre 150 et 750 °C.

23. Electrode en plastique conductrice souple préparée grâce au procédé selon l'une quelconque des revendications 16 à 22.

24. Electrode conductrice comprenant une matière plastique conductrice souple et un autre composant d'électrode qui est un maillage métallique, une toile métallique, une feuille métallique ou un feutre de graphite ; dans laquelle la matière plastique comprend :
a. une matière de remplissage conductrice ;
b. un polymère thermoplastique qui présente une cristallinité modérée à élevée ou une température de transition vitreuse (Tg) supérieure aux conditions de fonctionnement de l'électrode ; et
c. un polymère élastomère ;
dans laquelle la quantité de a. est telle que la matière plastique présente une résistivité qui n'est pas supérieure à 3,991 ohm.cm et les quantités relatives de a., b. et c. sont telles que la matière plastique conductrice est souple et présente une résistance à la traction élevée, et dans laquelle l'autre composant d'électrode est soudé à chaud et sous pression en une configuration qui est
(i) sur au moins une surface de la matière plastique conductrice souple,
(ii) une feuille métallique entre deux couches de la matière plastique conductrice, ou
(iii) un maillage métallique entre deux couches de la matière plastique conductrice.

25. Electrode selon la revendication 24, dans laquelle l'autre composant d'électrode est soudé à chaud et sous pression en une configuration qui est
(i) un maillage métallique sur une surface de la matière plastique conductrice souple,
(ii) un maillage métallique sur une surface de la matière plastique conductrice et un feutre de graphite sur l'autre surface de la matière plastique conductrice ;
(iii) un feutre de graphite sur au moins une surface de la matière plastique conductrice ; ou
(iv) un maillage, une toile, ou une feuille métallique entre deux couches de la matière plastique conductrice.

26. Electrode selon la revendication 24 ou la revendication 25, dans laquelle l'autre composant d'électrode est un feutre de graphite.

27. Electrode selon la revendication 24 ou la revendication 25, dans laquelle la matière de remplissage comprend du noir de carbone, du graphite, de la poudre métallique, des fibres de verre métallisées, des fibres de carbone dérivées de résine naturelle, des fibres de graphite, des fibres de carbone dérivées de polyacrylonitrile, ou des fibres de graphite dérivées de polyacrylonitrile.

28. Electrode selon la revendication 27, dans laquelle la matière de remplissage comprend du noir de carbone, en une quantité comprise entre 10 et 70 % en poids de la composition totale de plastique.

29. Electrode selon la revendication 27, dans laquelle la matière de remplissage comprend un mélange de noir de carbone et de fibres de graphite dans un rapport pondéral compris entre 5:95 et 95:5, en une quantité comprise entre 10 et 70 % en poids de la composition totale de plastique.

30. Electrode selon la revendication 29, dans laquelle le rapport de noir de carbone sur les fibres de graphite est de 50:50 % en poids.

31. Electrode selon l'une quelconque des revendications 27 à 30, dans laquelle au moins deux types différents de noir de carbone sont utilisés, en particulier, de la poudre fine de noir de carbone (2 à 35 nm) et de la poudre grossière de noir de carbone (35 à 10 000 nm) en un rapport pondéral de carbone fin/carbone grossier compris entre 1:99 et 99:1.

32. Electrode selon la revendication 27, dans laquelle le rapport pondéral de la teneur en noir de carbone plus les fibres de graphite sur le polymère total est 2:3.

33. Electrode selon la revendication 24 ou la revendication 25, dans laquelle le polymère thermoplastique constitue entre 10 et 80 % en poids de la matière plastique.

34. Electrode selon l'une quelconque des revendications 24 à 33, dans laquelle le polymère thermoplastique est choisi dans le groupe consistant en polyéthylène basse densité, polyéthylène haute densité, polypropylène, polybutylène et polystyrène.

35. Electrode selon l'une quelconque des revendications 24 à 34, dans laquelle le polymère élastomère comprend au moins un polymère choisi dans le groupe consistant en styrène-isoprène-styrène, caoutchouc nitrile (NBR), éthylène-propylène (EPDM), plastique époxydique (EP), caoutchouc butadiène-styrène (SB), caoutchouc éthylène-propylène (EPR), caoutchouc de n-butyle, styrène-butadiène-styrène, santoprène et styrène-(éthène-butène)-styrène.

36. Electrode selon l'une quelconque des revendications 24, 25 ou 35, dans laquelle le polymère élastomère constitue entre 1 et 50 % en poids de la matière plastique.

37. Pile redox tout vanadium ayant un compartiment positif contenant un catholyte en contact électrique avec une électrode positive, le catholyte comprenant un électrolyte contenant des ions vanadium tétravalents ou des ions vanadium pentavalents, un compartiment négatif contenant un anolyte en contact électrique avec une électrode négative, l'anolyte comprenant un électrolyte contenant des ions vanadium tétravalents, des ions vanadium trivalents ou des ions vanadium divalents, et un séparateur à conduction ionique disposé entre les compartiments positif et négatif et en contact avec le catholyte et l'anolyte afin de fournir une communication ionique entre ceux-ci et dans laquelle le catholyte inclut un sel de la formule VO(X)y où, lorsque y est 2, alors X est choisi dans le groupe consistant en F, Br et Cl, et lorsque y est 1, alors X est choisi dans le groupe consistant en SO₄ ou O, V₂O₅, V₂O₃, V₂O₄, VO, VSO₄, VOSO₄, V₂(SO₄)₃, (V₂)₂SO₄, etNH₄VO₃, et la concentration du sel est comprise entre 0,1 M et 5,0 M, et dans laquelle au moins l'une des électrodes positive et négative est une électrode en plastique conductrice selon l'une quelconque des revendications 2, 14 ou 25.

38. Utilisation d'une électrode selon l'une quelconque des revendications 2, 14 ou 25, dans une pile redox tout vanadium, dans laquelle ladite pile redox tout vanadium comprend un compartiment positif contenant un catholyte en contact électrique avec une électrode positive, le catholyte comprenant un électrolyte contenant des ions vanadium tétravalents ou des ions vanadium pentavalents, un compartiment négatif contenant un anolyte en contact électrique avec une électrode négative, l' anolyte comprenant un électrolyte contenant des ions vanadium tétravalents, des ions vanadium trivalents ou des ions vanadium divalents, et un séparateur à conduction ionique disposé entre les compartiments positif et négatif et en contact avec le catholyte et l'anolyte afin de fournir une communication ionique entre ceux-ci et dans laquelle le catholyte inclut un sel de la formule VO(X)y où, lorsque y est 2, alors X est choisi dans le groupe consistant en F, Br et Cl, et lorsque y est 1, alors X est choisi dans le groupe consistant en SO₄ ou O, V₂O₅, V₂O₃, V₂O₄, VO, VSO₄, VOSO₄, V₂(SO₄)₃, (V₂)₂SO₄, etNH₄VO₃, et la concentration du sel est comprise entre 0,1 M et 5,0 M.
